(19) **Europäisches Patentamt European Patent Office Office européen des brevets**

(11) **EP 4 667 893 A1**

(12) **EUROPEAN PATENT APPLICATION**
published in accordance with Art. 153(4) EPC

(43) Date of publication:
**24.12.2025 Bulletin 2025/52**

(21) Application number: **24756932.0**

(22) Date of filing: **14.02.2024**

(51) International Patent Classification (IPC):
**G01M 11/02** (2006.01)

(52) Cooperative Patent Classification (CPC):
**G01M 11/02**

(86) International application number:
**PCT/JP2024/005112**

(87) International publication number:
**WO 2024/172092 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.02.2023 JP 2023021827**

(71) Applicant: **Sumitomo Electric Industries, Ltd.
Osaka-shi, Osaka 541-0041 (JP)**

(72) Inventors:
• **HAYASHI, Tetsuya
Osaka-shi, Osaka 541-0041 (JP)**
• **YAMAGUCHI, Yuto
Osaka-shi, Osaka 541-0041 (JP)**

(74) Representative: **TBK
Bavariaring 4-6
80336 München (DE)**

(54) **METHOD FOR MEASURING CROSSTALK BETWEEN SPATIAL CHANNELS, AND DEVICE FOR MEASURING CROSSTALK BETWEEN SPATIAL CHANNELS**

(57) This inter-spatial channel crosstalk measuring method involves measuring inter-spatial channel crosstalk in a space division multiplexed optical system which has a first input/output unit and a second input/output unit on the side opposite to the first input/output unit, and also has a first spatial channel and a second spatial channel. This method comprises: a first step for forming or providing a light reflecting surface at the second input/output unit; a second step for inputting testing light into the first spatial channel at the first input/output unit; a third step for causing at least partial light of the testing light to be reflected at the light reflecting surface; a fourth step for detecting first light power which is the power of light that is a portion of said partial light outputted from the first spatial channel at the first input/output unit and second light power which is the power of light that is a portion of said partial light outputted from the second spatial channel at the first input/output unit; and a fifth step for calculating the magnitude of crosstalk between the first spatial channel and the second spatial channel on the basis of the first light power and the second light power.

**Fig.16**

**EP 4 667 893 A1**

**Description**

TECHNICAL FIELD

The present disclosure relates to an inter-spatial-channel crosstalk measurement method and an inter-spatial-channel crosstalk measurement apparatus. This application claims priority based on Japanese Patent Application No. 2023-021827 filed on February 15, 2023, and the entire contents of which are incorporated herein by reference.

BACKGROUND ART

Patent literature 1 and Non-patent literature 1 disclose an inter-core crosstalk measurement method for a multi-core optical fiber. In the methods described in Patent Literature 1 and Non-patent Literature 1, inter-core crosstalk is measured by causing a measurement beam to enter a certain core in one end of a multi-core optical fiber and detecting the power of measurement beam output from each of the core and another core in the other end of the multi-core optical fiber.

Non-patent literature 2 discloses an inter-core crosstalk measurement method for a multi-core optical fiber using an optical time domain reflectometer (OTDR) measurement method. In the method described in Non-patent literature 2, inter-core crosstalk is measured by causing pulsed light to enter a certain core in one end of a multi-core optical fiber and detecting a temporal change in the power of backward Rayleigh scattering light output from the core and another core in the one end of the multi-core optical fiber.

CITATION LIST

PATENT LITERATURE

Patent literature 1: WO 2012/115162

NON-PATENT LITERATURE

Non-patent literature 1: Tetsuya Hayashi et al., "Characterization of Crosstalk in Ultra-Low-Crosstalk Multi-Core Fiber", Journal of Lightwave Technology, Vol. 30, No. 4, (2012)
Non-patent literature 2: Masataka Nakazawa et al., "Nondestructive measurement of mode couplings along a multi-core fiber using a synchronous multichannel OTDR", Optics Express, Vol. 20, No. 11, (2012)

SUMMARY OF INVENTION

An inter-spatial-channel crosstalk measurement method according to an aspect of the present disclosure includes a first step to a fifth step. In the first step, a light reflection suppressor configured to suppress reflection of test light is formed or provided, on a second entrance/exit surface of a space division multiplexing optical fiber. In the second step, the test light is caused to enter a first spatial channel on a first entrance/exit surface. In the third step, at least part of the test light is caused to undergo Rayleigh backscattering in the space division multiplexing optical fiber. In the fourth step, a first optical power which is a power of light of the at least part of the test light and is a power of light emitted from the first spatial channel on the first entrance/exit surface, and a second optical power which is a power of light of the at least part of the test light and is a power of light emitted from a second spatial channel on the first entrance/exit surface are detected. In the fifth step, a magnitude of crosstalk between the first spatial channel and the second spatial channel is calculated based on the first optical power and the second optical power.

BRIEF DESCRIPTION OF THE DRAWINGS

[FIG. 1] FIG. 1 is a diagram showing a configuration of a measurement apparatus according to an embodiment of the present disclosure.
[FIG. 2] FIG. 2 is a diagram showing a cross-section perpendicular to the central axis of a multi-core optical fiber.
[FIG. 3] FIG. 3 is a diagram showing a configuration of a three-port optical coupler (optical circulator).
[FIG. 4] FIG. 4 is a diagram showing a configuration of one modification of a measurement apparatus.
[FIG. 5] FIG. 5 is a diagram showing a configuration of another modification of a measurement apparatus.

[FIG. 6] FIG. 6 is a cross-sectional view showing an example of a light reflection suppressor formed or provided on a second entrance/exit surface.

[FIG. 7] FIG. 7 is a cross-sectional view showing an example of a light reflection suppressor formed or provided on a second entrance/exit surface.

[FIG. 8] FIG. 8 is a graph showing relationships between a crosstalk measurement error caused by reflection light on a second entrance/exit surface and an angle of a second entrance/exit surface.

[FIG. 9] FIG. 9 is a graph showing relationships between a crosstalk measurement error caused by reflection light on a second entrance/exit surface and an angle of a second entrance/exit surface.

[FIG. 10] FIG. 10 is a cross-sectional view showing an example of a light reflection suppressor formed or provided on a second entrance/exit surface.

[FIG. 11] FIG. 11 is a cross-sectional view showing an example of a light reflection suppressor formed or provided on a second entrance/exit surface.

[FIG. 12] FIG. 12 is a cross-sectional view showing an example of a light reflection suppressor formed or provided on a second entrance/exit surface.

[FIG. 13] FIG. 13 is a cross-sectional view showing an example of a light reflection suppressor formed or provided on a second entrance/exit surface.

[FIG. 14] FIG. 14 is a cross-sectional view showing an example of a light reflection suppressor formed or provided on a second entrance/exit surface.

[FIG. 15] FIG. 15 is a cross-sectional view showing an example of a light reflection suppressor formed or provided on a second entrance/exit surface.

[FIG. 16] FIG. 16 is a cross-sectional view showing an example of a light reflection suppressor formed or provided on a second entrance/exit surface.

[FIG. 17] FIG. 17 is a graph schematically showing a time waveform of light power of continuous light.

[FIG. 18] FIG. 18 is a graph schematically showing a time waveform of light power of chopped light.

[FIG. 19] FIG. 19 is a flowchart showing an inter-spatial-channel crosstalk measurement method according to an embodiment.

[FIG. 20] FIG. 20 is a flowchart showing a modification of an inter-spatial-channel crosstalk measurement method.

[FIG. 21] FIG. 21 is a flowchart showing another modification of an inter-spatial-channel crosstalk measurement method.

[FIG. 22] FIG. 22 is a flowchart showing still another modification of an inter-spatial-channel crosstalk measurement method.

[FIG. 23] FIG. 23 is a flowchart showing still another modification of an inter-spatial-channel crosstalk measurement method.

[FIG. 24] FIG. 24 is a diagram schematically showing a configuration of a measurement apparatus according to a reference example.

DETAILED DESCRIPTION

[Problems to be Solved by Present Disclosure]

For example, in crosstalk measurement of a conventional space division multiplexing optical fiber such as a multi-core optical fiber, as described in Patent literature 1 and Non-patent literature 1, test light is caused to enter a certain spatial channel (for example, a core) in a first end of the space division multiplexing optical fiber, and power of the test light output from the spatial channel and another spatial channel is detected at a second end of the multi-core optical fiber. However, it may sometimes be difficult to connect a light source that outputs test light to a first end of a space division multiplexing optical fiber and connect a photodetector to a second end of the space division multiplexing optical fiber.

In contrast, as described in Non-patent literature 2, by using an OTDR measurement method that uses backward Rayleigh scattering light, it is possible to input and output test light only at a first end of a space division multiplexing optical fiber. However, the power of the backward Rayleigh scattering light is very small. Thus, in a case where the crosstalk is small, the level of the detection signal becomes extremely weak when the backward Rayleigh scattering light component at each longitudinal position of the optical fiber is position-resolved and measured using pulsed light as in the OTDR measurement method. Thus, noise increases with respect to the detection signal, and the crosstalk measurement accuracy decreases.

[Advantageous Effects of Present Disclosure]

According to the present disclosure, it is possible to provide an inter-spatial-channel crosstalk measurement method and an inter-spatial-channel crosstalk measurement apparatus capable of connecting a light source that outputs test light and a photodetector to a first end of a space division multiplexing optical fiber and accurately measuring the magnitude of inter-spatial-channel crosstalk.

[Description of Embodiments of Present Disclosure]

First, the contents of the embodiments of the present disclosure will be listed and described.

[1] An inter-spatial-channel crosstalk measurement method according to an aspect of the present disclosure includes a first step to a fifth step. In the first step, a light reflection suppressor configured to suppress reflection of test light is formed or provided, on a second entrance/exit surface of a space division multiplexing optical fiber. In the second step, the test light is caused to enter a first spatial channel on a first entrance/exit surface. In the third step, at least part of the test light is caused to undergo Rayleigh backscattering in the space division multiplexing optical fiber. In the fourth step, a first optical power which is a power of light of the at least part of the test light and is a power of light emitted from the first spatial channel on the first entrance/exit surface, and a second optical power which is a power of light of the at least part of the test light and is a power of light emitted from a second spatial channel on the first entrance/exit surface are detected. In the fifth step, a magnitude of crosstalk between the first spatial channel and the second spatial channel is calculated based on the first optical power and the second optical power.

In the measurement method according to the above [1], it is sufficient to connect the light source that outputs the test light and the photodetector to the first entrance/exit surface of the space division multiplexing optical fiber, and it is not necessary to connect any of them to the second entrance/exit surface. Thus, even when it is not easy to access both the entrance/exit surfaces of the space division multiplexing optical fiber at the same time, the light source and the photodetector can be easily connected. Furthermore, by reducing the number of connections in the measurement by half, crosstalk measurement of the space division multiplexing optical fiber can be efficiently performed. In the measurement method of the above [1], the level of the detection signal can be increased and the crosstalk measurement accuracy can be improved by detecting, for example, the total sum of the backward Rayleigh scattering light, instead of performing the position resolution of the backward Rayleigh scattering light component. At this time, if the light reflection suppressor is not provided, part of the test light may be reflected on the second entrance/exit surface, and the reflected test light may be mixed into the backward Rayleigh scattering light. Since the power of the backward Rayleigh scattering light is very small, in such a case, there is a possibility that the accuracy of crosstalk measurement cannot be increased. In the measurement method of the above [1], the light reflection suppressor configured to suppress reflection of test light is formed or provided on the second entrance/exit surface. Thus, since reflection of part of the test light on the second entrance/exit surface can be reduced, mixing of the reflection light into the backward Rayleigh scattering light can be reduced. Thus, it is possible to measure the inter-channel crosstalk with high accuracy.

[2] In the measurement method according to the above [1], the test light may be continuous light or chopped light. The first optical power may be a total sum of optical power components emitted from the first spatial channel among return optical power components of the test light including backscattered light at each position in a longitudinal direction of the space division multiplexing optical fiber. The second optical power may be a total sum of optical power components emitted from the second spatial channel among the return optical power components of the test light including backscattered light at each position in the longitudinal direction of the space division multiplexing optical fiber.

[3] In the measurement method according to the above [1] or [2], in the fifth step, a magnitude XT of the crosstalk may be calculated using Formula (A) below, where PW1 denotes the first optical power, PW2 denotes the second optical power, $\alpha$ (km$^{-1}$) denotes a mean value of transmission loss coefficients of the first spatial channel and the second spatial channel, and L (km) denotes a length of the space division multiplexing optical fiber.

[Math. 1]

$$XT = \frac{PW2}{PW1} \frac{\left[ \dfrac{\exp(2\alpha L) - 1}{2} \right]}{\left[ \dfrac{\exp(2\alpha L) - 1}{2\alpha L} - 1 \right]} \quad \cdot \cdot \cdot \quad (A)$$

For example, by using such a calculation formula, the magnitude of crosstalk can be calculated only from the total sum of the power of backward Rayleigh scattering light from the first entrance/exit surface to the second entrance/exit surface.

[4] In the measurement method according to the above [1] to [3], when a loss coefficient $\alpha_{dB}$ of each of the first spatial channel and the second spatial channel is defined as $\alpha_{dB}$ (dB/km) = $(10/\ln 10)\alpha$, $\alpha_{dB}\cdot L$ (dB) may be 0.01 dB or more. This allows the backward Rayleigh scattering light having a power of a sufficiently measurable level to return to the first entrance/exit surface.

[5] In the measurement method according to the above [1] to [4], the light reflection suppressor may be configured to suppress reflection of the test light on the second entrance/exit surface of the space division multiplexing optical fiber. When a wavelength of the test light is denoted by $\lambda$ ($\mu$m), a mean value of refractive indices of the first spatial channel and the second spatial channel of the space division multiplexing optical fiber is denoted by n, 0.5 times a mean value of mode field diameters of the first spatial channel and the second spatial channel is denoted by w ($\mu$m), and a return loss caused by the reflection on the second entrance/exit surface is denoted by RL (dB), RL may satisfy Formula (B) below.

[Math. 2]

$$\mathrm{RL} \geq 97.7 \frac{\lambda}{nw} + 9.6 \qquad \cdot \ \cdot \ \cdot \quad (\,\mathrm{B}\,)$$

This makes it possible to reduce measurement errors caused by reflection of the test light on the second entrance/exit surface to 1 dB or less.

[6] In the measurement method according to the above [1] to [4], the light reflection suppressor may be configured to suppress reflection of the test light on the second entrance/exit surface of the space division multiplexing optical fiber. When a wavelength of the test light is denoted by $\lambda$ ($\mu$m), a mean value of refractive indices of the first spatial channel and the second spatial channel of the space division multiplexing optical fiber is denoted by n, and 0.5 times a mean value of mode field diameters of the first spatial channel and the second spatial channel is denoted by w ($\mu$m), an angle $\theta$ (degree) formed between each of planes tangent to centers of the first spatial channel and the second spatial channel and a plane orthogonal to a central axis of the space division multiplexing optical fiber may satisfy Formula (C) below.

[Math. 3]

$$\theta \geq 17.8 \frac{\lambda}{nw} \qquad \cdot \ \cdot \ \cdot \quad (\,\mathrm{C}\,)$$

This makes it possible to reduce measurement errors caused by reflection of the test light on the second entrance/exit surface to 1 dB or less.

[7] In the measurement method according to the above [1] to [6], the first step may include forming the light reflection suppressor by forming the second entrance/exit surface by cleaving the space division multiplexing optical fiber. Thus, the light reflection suppressor can be easily formed on the second entrance/exit surface.

[8] In the measurement method according to the above [1] to [6], the first step may include forming the light reflection suppressor by polishing the second entrance/exit surface of the space division multiplexing optical fiber. Thus, the light reflection suppressor can be easily formed on the second entrance/exit surface.

[9] In the measurement method according to the above [1] to [5], the first step may include providing the light reflection suppressor by bringing a substance having a refractive index matching a refractive index of the space division multiplexing optical fiber into contact with the second entrance/exit surface of the space division multiplexing optical fiber. Thus, the light reflection suppressor can be easily provided on the second entrance/exit surface.

[10] In the measurement method according to the above [9], when a mean value of refractive indices of the first spatial channel and the second spatial channel of the space division multiplexing optical fiber is denoted by n and the refractive index of the substance is denoted by n0, a relationship between a relative refractive index difference $\Delta 0$ defined as $\Delta 0 = |n - n0|/n0$ and $\alpha_{dB}\cdot L$ (dB) may satisfy Formula (D) below.

[Math. 4]

$$\Delta 0 \leq 1.14 \times 10^{-2} \left( \alpha_{dB} L \right)^{0.473} \qquad \cdot \ \cdot \ \cdot \quad (\,\mathrm{D}\,)$$

This makes it possible to reduce crosstalk measurement errors to 1 dB or less.

[11] In the measurement method according to the above [1] to [4], the light reflection suppressor may include another optical fiber having a cladding mainly including the same material as a cladding of the space division multiplexing optical fiber. The first step may include fusion-splicing an end surface of the another optical fiber to the second entrance/exit surface of the space division multiplexing optical fiber. The another optical fiber after fusion-splicing does not have to have either a spatial channel aligned with the first spatial channel of the space division multiplexing optical fiber or a spatial channel aligned with the second spatial channel of the space division multiplexing optical fiber. Thus, the light reflection suppressor can be easily provided on the second entrance/exit surface.

[12] In the measurement method according to the above [1] to [11], the space division multiplexing optical fiber may be a multi-core optical fiber or a multi-mode optical fiber.

[13] In the measurement method according to the above [1] to [12], the first spatial channel and the second spatial channel may be a first core and a second core, respectively, or may be a first mode and a second mode, respectively.

[14] An inter-spatial-channel crosstalk measurement apparatus according to an aspect of the present disclosure is an apparatus for measuring crosstalk between spatial channels of a space division multiplexing optical fiber having a first entrance/exit surface and a second entrance/exit surface and having N spatial channels (with N being an integer of 2 or more). The measurement apparatus includes a light source unit, a light reflection suppressor, an optical detection unit, and a calculation unit. The light source unit is configured to cause test light to enter the N spatial channels on the first entrance/exit surface. The light reflection suppressor is formed or provided on the second entrance/exit surface and is configured to suppress reflection of the test light. The optical detection unit is configured to detect a first optical power which is a power of light of at least part of the test light and is a power of light emitted from a first spatial channel that the test light enters, and a second optical power which is a power of light of the at least part of the test light and is a power of light emitted from a second spatial channel different from the first spatial channel, and the at least part of the test light has undergone Rayleigh backscattering in the space division multiplexing optical fiber. The calculation unit is configured to calculate a magnitude of crosstalk between the first spatial channel and the second spatial channel, based on the first optical power and the second optical power.

In the measurement apparatus of the above [14], it is sufficient to connect the light source unit and the optical detection unit to the first entrance/exit surface of the space division multiplexing optical fiber, and it is not necessary to connect any of them to the second entrance/exit surface. Thus, even when it is not easy to access both the entrance/exit surfaces of the space division multiplexing optical fiber at the same time, the light source and the photodetector can be easily connected. Furthermore, by reducing the number of connections in the measurement by half, crosstalk measurement of the space division multiplexing optical fiber can be efficiently performed. In addition, in the measurement apparatus according to the above [14], the light reflection suppressor configured to suppress reflection of the test light is formed or provided on the second entrance/exit surface. Thus, since reflection of part of the test light on the second entrance/exit surface can be reduced, mixing of the reflection light into the backward Rayleigh scattering light can be reduced. Thus, it is possible to measure the inter-channel crosstalk with high accuracy.

[15] In the measurement apparatus according to the above [14], the test light may be continuous light or chopped light. The first optical power may be a total sum of optical power components emitted from the first spatial channel among return optical power components of the test light including backscattered light at each position in a longitudinal direction of the space division multiplexing optical fiber. The second optical power may be a total sum of optical power components emitted from the second spatial channel among the return optical power components of the test light including backscattered light at each position in the longitudinal direction of the space division multiplexing optical fiber.

[16] In the measurement apparatus according to the above [14] or [15], the calculation unit may be configured to calculate a magnitude XT of the crosstalk using Formula (E) below, where PW1 denotes the first optical power, PW2 denotes the second optical power, $\alpha$ (km$^{-1}$) denotes a mean value of transmission loss coefficients of the first spatial channel and the second spatial channel, and L (km) denotes a length of the space division multiplexing optical fiber.
[Math. 5]

$$XT = \frac{PW2}{PW1} \frac{\left[\dfrac{\exp(2\alpha L)-1}{2}\right]}{\left[\dfrac{\exp(2\alpha L)-1}{2\alpha L}-1\right]} \quad \cdot\cdot\cdot \quad (\text{E})$$

For example, by using such a calculation formula, the magnitude of crosstalk can be calculated only from the total sum of the power of backward Rayleigh scattering light from the first entrance/exit surface to the second entrance/exit surface.

[17] In the measurement apparatus according to the above [14] to [16], when a loss coefficient $\alpha_{dB}$ of each of the first spatial channel and the second spatial channel is defined as $\alpha_{dB}$ (dB/km) = (10/ln10)$\alpha$, $\alpha_{dB}$·L (dB) may be 0.01 dB or more. This allows the backward Rayleigh scattering light having a power of sufficiently measurable level to return to the first entrance/exit surface.

[18] In the measurement apparatus according to the above [14] to [17], the light reflection suppressor may be configured to suppress reflection of the test light on the second entrance/exit surface of the space division multiplexing optical fiber, and when a wavelength of the test light is denoted by $\lambda$ ($\mu$m), a mean value of refractive indices of the first spatial channel and the second spatial channel of the space division multiplexing optical fiber is denoted by n, 0.5 times a mean value of mode field diameters of the first spatial channel and the second spatial channel is denoted by w ($\mu$m), and a return loss caused by the reflection on the second entrance/exit surface is denoted by RL (dB), RL may satisfy Formula (F) below.

[Math. 6]

$$RL \geq 97.7\frac{\lambda}{nw}+9.6 \qquad \cdot \ \cdot \ \cdot \ (\text{F})$$

This makes it possible to reduce measurement errors caused by reflection of the test light on the second entrance/exit surface to 1 dB or less.

[19] In the measurement apparatus according to the above [14] to [15], the light reflection suppressor may be configured to suppress reflection of the test light on the second entrance/exit surface of the space division multiplexing optical fiber. When a wavelength of the test light is denoted by $\lambda$ ($\mu$m), a mean value of refractive indices of the first spatial channel and the second spatial channel of the space division multiplexing optical fiber is denoted by n, and 0.5 times a mean value of mode field diameters of the first spatial channel and the second spatial channel is denoted by w ($\mu$m), an angle $\theta$ (degree) formed between each of planes tangent to centers of the first spatial channel and the second spatial channel and a plane orthogonal to a central axis of the space division multiplexing optical fiber may satisfy Formula (G) below.

[Math. 7]

$$\theta \geq 17.8\frac{\lambda}{nw} \qquad \cdot \ \cdot \ \cdot \ (\text{G})$$

This makes it possible to reduce measurement errors caused by reflection of the test light on the second entrance/exit surface to 1 dB or less.

[20] In the measurement apparatus according to the above [14] to [18], the light reflection suppressor may include a substance having a refractive index matching a refractive index of the space division multiplexing optical fiber, and the substance may be in contact with the second entrance/exit surface of the space division multiplexing optical fiber. Thus, the light reflection suppressor can be easily provided on the second entrance/exit surface.

[21] In the measurement apparatus according to the above [20], when a mean value of refractive indices of the first spatial channel and the second spatial channel of the space division multiplexing optical fiber is denoted by n and the refractive index of the substance is denoted by n0, a relationship between a relative refractive index difference $\Delta 0$ defined as $\Delta 0 = |n - n0|/n0$ and $\alpha_{dB} \cdot L$ (dB) may satisfy Formula (H) below.

[Math. 8]

$$\Delta 0 \leq 1.14 \times 10^{-2}\left(\alpha_{dB}L\right)^{0.473} \qquad \cdot \ \cdot \ \cdot \ (\text{H})$$

This makes it possible to reduce crosstalk measurement errors to 1 dB or less.

[22] In the measurement apparatus according to the above [14] to [17], the light reflection suppressor may include another optical fiber having a cladding mainly including the same material as a cladding of the space division multiplexing optical fiber, the another optical fiber may have an end surface fusion-spliced to the second entrance/exit surface of the space division multiplexing optical fiber. The another optical fiber does not have to have either a spatial channel aligned with the first spatial channel of the space division multiplexing optical fiber or a spatial channel aligned with the second spatial channel of the space division multiplexing optical fiber. Thus, the light reflection suppressor can be easily provided on the second entrance/exit surface.

[23] In the measurement apparatus according to the above [14] to [22], the space division multiplexing optical fiber may be a multi-core optical fiber or a multi-mode optical fiber.

[24] In the measurement apparatus according to the above [14] to [23], the first spatial channel and the second spatial channel may be a first core and a second core, respectively, or may be a first mode and a second mode, respectively.

[Details of Embodiments of Present Disclosure]

A specific example of the embodiment will be described with reference to the drawings as necessary. The present invention is not limited to these examples, but is defined by the scope of the claims, and is intended to include all modifications within the meaning and scope equivalent to the scope of the claims. In the following description, the same elements are denoted by the same reference numerals in the description of the drawings, and redundant description will be omitted.

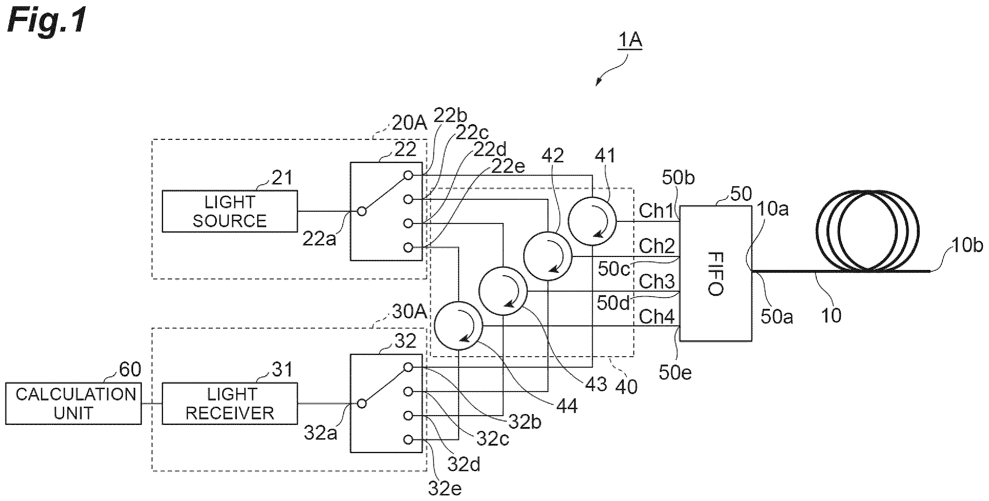

FIG. 1 is a diagram showing a configuration of a measurement apparatus 1A according to an embodiment of the present disclosure. The measurement apparatus 1A is an apparatus for measuring inter-spatial-channel crosstalk of a space division multiplexing (SDM) optical fiber. The SDM optical fiber is, for example, a multi-core optical fiber (hereinafter, referred to as an MCF) or a multi-mode optical fiber. The SDM optical fiber has a plurality of spatial channels. The plurality of spatial channels are, for example, a plurality of cores. Alternatively, the plurality of spatial channels may be, for example, a plurality of modes. In the following description, an apparatus for measuring inter-core crosstalk of an MCF 10 as an example of an SDM optical fiber will be described.

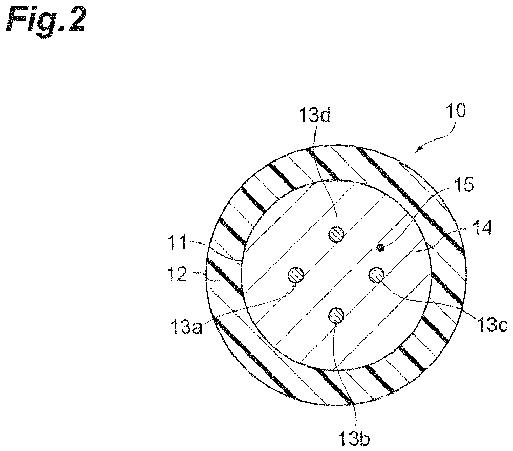

First, the configuration of the MCF 10 will be described. The MCF 10 has a first entrance/exit surface 10a and a second entrance/exit surface 10b opposite the first entrance/exit surface 10a. FIG. 2 is a diagram showing a cross-section perpendicular to a central axis of the MCF 10. As shown in FIG. 2, the MCF 10 includes a glass fiber 11 and a coating resin 12 that coats an outer peripheral surface of the glass fiber 11. The glass fiber 11 has N cores as N spatial channels (with N being an integer of 2 or more). In the illustrated example, the glass fiber 11 has four (that is, N = 4) cores 13a, 13b, 13c, and 13d. The glass fiber 11 further has a cladding 14. Further, the glass fiber 11 may have a marker 15. In the illustrated example, the cores 13a, 13b, 13c, and 13d are arranged at equal intervals on a concentric circle having a center on the central axis of the MCF 10 in a cross-section orthogonal to the central axis of the MCF 10. The cladding 14 is a common cladding surrounding the cores 13a, 13b, 13c, and 13d and the marker 15. The marker 15 has a refractive index different from the cladding 14.

Here, $\alpha$ (km$^{-1}$) denotes a mean value of the transmission loss coefficients of the cores 13a, 13b, 13c, and 13d, and L (km) denotes a length of the MCF 10. Further, a loss coefficient $\alpha_{dB}$ of each of the cores 13a, 13b, 13c, and 13d is defined as $\alpha_{dB}$ (dB/km) = $(10/\ln10)\alpha$. In this case, the transmission loss $\alpha_{dB} \cdot L$ (dB) in the MCF 10 is, for example, 0.01 dB or more.

Reference is again made to FIG. 1. The measurement apparatus 1A includes a light source unit 20A, an optical detection unit 30A, an optical coupler unit 40, a fan-in/fan-out (FIFO) 50, and a calculation unit 60.

The light source unit 20A emits test light that enters each of the cores 13a, 13b, 13c, and 13d on the first entrance/exit surface 10a. The light source unit 20A of the embodiment includes a single light source 21 and a first optical switch 22. The first optical switch 22 includes at least one input port 22a and at least as many output ports 22b, 22c, 22d, and 22e as the number of the cores 13a, 13b, 13c, and 13d. The first optical switch 22 selectively optically couples the input port 22a to one of the output ports 22b, 22c, 22d, or 22e. The input port 22a is optically coupled to the light source 21.

The optical detection unit 30A detects light emitted from each of the cores 13a, 13b, 13c, and 13d on the first entrance/exit surface 10a. The optical detection unit 30A of the embodiment includes a single light receiver (power meter) 31 and a second optical switch 32. The second optical switch 32 includes at least one output port 32a and at least as many input ports 32b, 32c, 32d, and 32e as the number of the cores 13a, 13b, 13c, and 13d. The second optical switch 32 selectively optically couples the output port 32a to one of the input ports 32b, 32c, 32d, or 32e. The output port 32a is optically coupled to the light receiver 31.

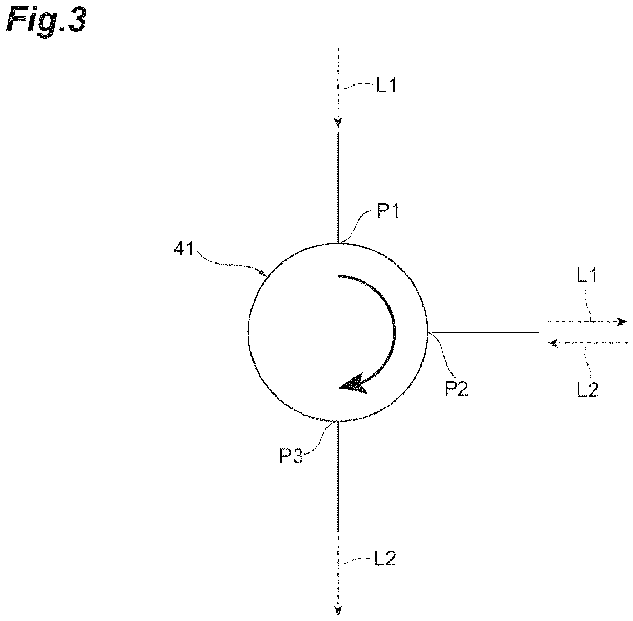

The optical coupler unit 40 includes three-port optical couplers 41, 42, 43, and 44, which are three-port optical couplers, the number of which is the same as the number of cores 13a, 13b, 13c, and 13d. The three-port optical couplers 41, 42, 43, and 44 are, for example, optical circulators. FIG. 3 is a diagram showing a configuration of the three-port optical coupler (optical circulator) 41. The configuration of each of the three-port optical couplers 42, 43, and 44 is the same as the configuration of the three-port optical coupler 41. As shown in FIG. 3, the three-port optical coupler 41 has a first port P1, a second port P2 and a third port P3. The three-port optical coupler 41 outputs a light L1 input to the first port P1 from the second port P2 with low loss, and outputs a light L2 input to the second port P2 from the third port P3 with low loss. The light L1 input to the first port P1 is hardly output from the third port P3. The light L2 input to the second port P2 is hardly output from the first port P1. The light input to the third port P3 is hardly output from either the first port P1 and the second port P2.

An insertion loss from the first port P1 to the second port P2 is, for example, 1 dB or less. An insertion loss from the first port P1 to the third port P3 is, for example, 30 dB or more, or 40 dB or more. An insertion loss from the second port P2 to the third port P3 is, for example, 1 dB or less. An insertion loss from the second port P2 to the first port P1 is, for example, 30 dB or more, or 40 dB or more. An insertion loss from the third port P3 to each of the first port P1 and the second port P2 is, for example, 30 dB or more, or 40 dB or more.

Reference is made again to FIG. 1. The first port P1 of each of the three-port optical couplers 41, 42, 43, and 44 is optically coupled to a corresponding one of the output ports 22b, 22c, 22d, and 22e of the first optical switch 22. Thus, the first optical switch 22 can be selectively optically couple the light source 21 to the first port P1 of one of the three-port optical couplers 41, 42, 43, or 44. The third port P3 of each of the three-port optical couplers 41, 42, 43, and 44 is optically coupled to a corresponding one of the input ports 32b, 32c, 32d, and 32e of the second optical switch 32. Thus, the second optical switch 32 can selectively optically couple the light receiver 31 to the third port P3 of one of the three-port optical couplers 41, 42, 43, or 44. In the above description, the three-port optical couplers 41, 42, 43, and 44 each having three ports are exemplified as the three-port optical couplers, but the three-port optical coupler is not limited thereto, and may be a 1 × 2 optical fiber coupler or a 2 × 2 optical fiber coupler in which one port is subjected to termination processing for reflection reduction may be used. By using a fused optical fiber coupler as the optical fiber coupler, reflection in the optical fiber coupler can be suppressed. The optical fiber coupler may be a waveguide type optical fiber coupler.

When the three-port optical coupler is a 1 × 2 optical fiber coupler or a 2 × 2 optical fiber coupler in which one port is subjected to termination processing for reflection reduction, the three-port optical coupler has the first port P1, the second port P2, and the third port P3. The three-port optical coupler outputs the light L1 input to the first port P1 from the second port P2 with low loss, and outputs the light L2 input to the second port P2 from the third port P3 with low loss. The light L1 input to the first port P1 is hardly output from the third port P3. The light L2 input to the second port P2 is output from the first port P1 with low loss, and the light input to the third port P3 is also output from both of the second ports P2 with low loss, but there is no significant influence on the measurement. The light input to the third port P3 is hardly output from the first port P1. However, in the 1 × 2 optical fiber coupler or in the 2 × 2 optical fiber coupler in which one port is subjected to termination processing for reflection reduction, the insertion loss between the port P1 and the port P2 and the insertion loss between the port P2 and the port P3, which have low insertion losses, are higher than those in the optical circulator. This is because, for example, when the 1 × 2 optical fiber coupler or the 2 × 2 optical fiber coupler is an optical power splitter having a branching ratio of 50:50, a loss of about 3 dB occurs as a theoretical loss.

The insertion loss from the first port P1 to the second port P2 is, for example, 4 dB or less. The insertion loss from the first port P1 to the third port P3 is, for example, 40 dB or more, or 50 dB or more. The insertion loss from the second port P2 to the third port P3 is, for example, 4 dB or less. The insertion loss from the third port P3 to the first port P1 is, for example, 40 dB or more, or 50 dB or more.

The FIFO 50 is an optical component that optically couples each of the cores 13a, 13b, 13c, and 13d in the first entrance/exit surface 10a of the MCF 10 and the second port P2 of a corresponding one of the three-port optical couplers 41, 42, 43, and 44. The FIFO 50 includes an input/output port 50a connected to the MCF 10, and input/output ports 50b, 50c, 50d, and 50e connected to the second ports P2 of the three-port optical couplers 41, 42, 43, and 44, respectively. The input/output port 50a of the FIFO 50 is formed by, for example, reducing the diameters of the tip portions of the of the same number of single-core fibers as the cores 13a, 13b, 13c, and 13d of the MCF 10 by etching, and bundling the tip portions. In the bundled tip portions, the interval between the cores of the single-core fibers is the same as the interval between the cores 13a, 13b, 13c, and 13d of the MCF 10. The bundle of the tip portions abuts on the first entrance/exit surface 10a of the MCF 10, and thus the first end of each of the single-core fibers is optically coupled to a corresponding one of the cores 13a, 13b, 13c, and 13d. The second end of each of the single-core fibers constitutes the input/output port 50b, 50c, 50d, 50e, and is optically coupled to the second port P2 of a corresponding one of the three-port optical couplers 41, 42, 43, and 44.

The calculation unit 60 calculates a magnitude of inter-core crosstalk based on the detection result in the optical detection unit 30A. The calculation unit 60 is configured by a computer including, for example, a CPU, a memory, and a storage apparatus. The storage apparatus stores software for calculating the magnitude of inter-core crosstalk. The magnitude of the inter-core crosstalk is calculated by the CPU reading and executing the software. The calculation unit 60 is electrically (or communicably) connected to the light receiver 31.

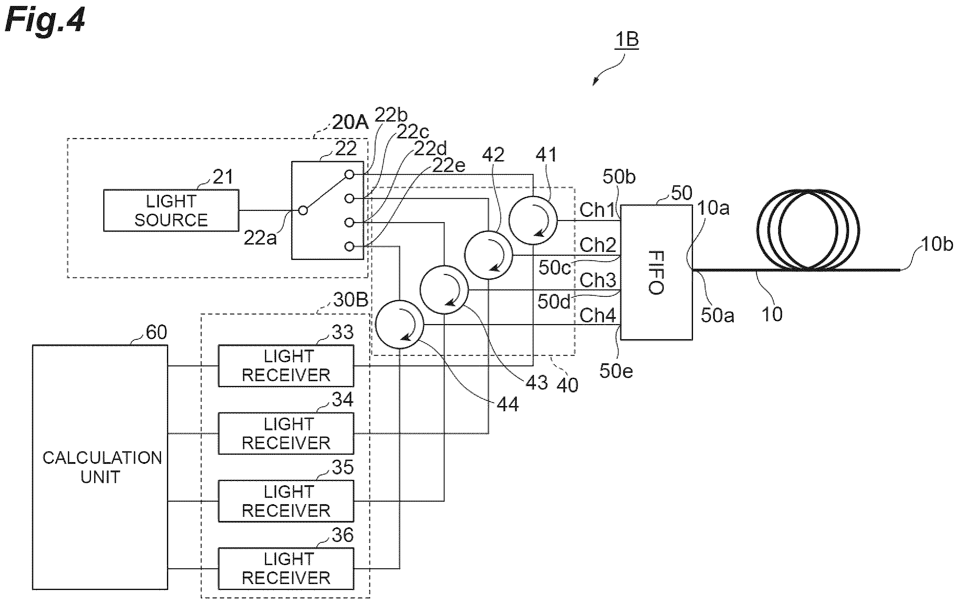

FIG. 4 is a diagram showing a configuration of a measurement apparatus 1B as a modification of the measurement apparatus 1A. The measurement apparatus 1B includes an optical detection unit 30B instead of the optical detection unit 30A shown in FIG. 1. The optical detection unit 30B includes light receivers (power meters) 33, 34, 35, and 36, the number of which is the same as the number of the cores 13a, 13b, 13c, and 13d of the MCF 10. Each of the light receivers 33, 34, 35, and 36 is optically coupled to the third port P3 of a corresponding one of the three-port optical couplers 41, 42, 43, and 44. The calculation unit 60 is electrically (or communicably) connected to the light receivers 33, 34, 35, and 36.

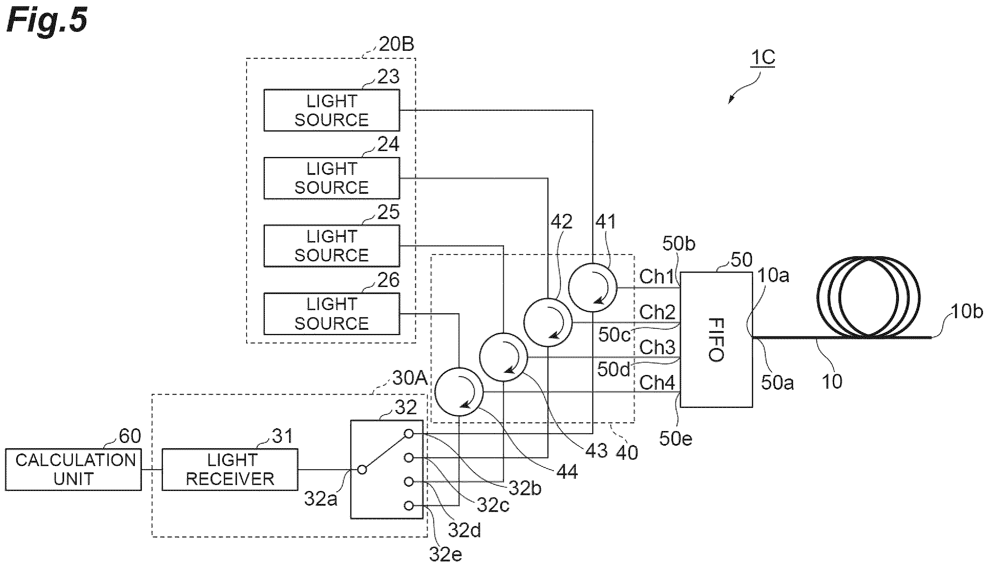

FIG. 5 is a diagram showing a configuration of a measurement apparatus 1C as another modification of the measurement apparatus 1A. The measurement apparatus 1C includes a light source unit 20B instead of the light source unit 20A shown in FIG. 1. The light source unit 20B includes the light sources 23, 24, 25, and 26, the number of which is the same as the number of cores 13a, 13b, 13c, and 13d of the MCF 10. Each of the light sources 23, 24, 25, and 26 is optically coupled to the first port P1 of a corresponding one of the three-port optical couplers 41, 42, 43, and 44. The measurement apparatus may include the optical detection unit 30B instead of the optical detection unit 30A, and may include the light source unit 20B instead of the light source unit 20A.

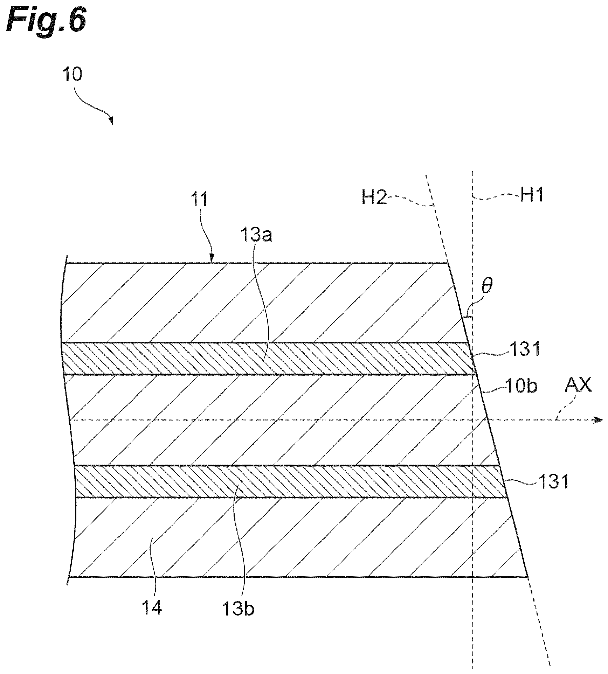

Here, an example of the configuration of the second entrance/exit surface 10b of the MCF 10 will be described. A light reflection suppressor configured to suppress reflection of test light propagating from the first entrance/exit surface 10a to the second entrance/exit surface 10b in each of the cores 13a, 13b, 13c, and 13d is formed or provided on the second entrance/exit surface 10b. FIGS. 6, 7, and 10 to 16 are cross-sectional views each showing an example of the light reflection suppressor formed or provided on the second entrance/exit surface 10b, and each shows a cross-section along a central axis AX of the glass fiber 11 at the MCF 10. In these figures, the coating resin 12 is not shown. The second entrance/exit surface 10b includes an end surface of the glass fiber 11. Here, the reflectance can be defined by Pr/Pi, where Pi is the power of light entering a light reflection surface, and Pr is the power of light reflected from the light reflection surface. In IEC-61300-3-6, a value obtained by multiplying a decibel value of the reflectance (Pr/Pi) by -1 is defined as "Return Loss", and a method for measuring the "Retern Loss" is exemplified. Thus, the reflectance at the light reflecting surface can also be measured by the method described in IEC-61300-3-6. The reflectance of the light reflection suppressor can be measured by considering the light reflection suppressor as a light reflection surface.

It is assumed that the transmission loss $\alpha_{dB} \cdot L$ is 0.01 dB or more, the refractive index n is 1.3 to 2, the wavelength $\lambda$ is 1.31 $\mu$m to 1.625 $\mu$m, and w is 2 $\mu$m to 8 $\mu$m. In this case, when the return loss is RL (dB) in a case where the crosstalk measurement error caused by the reflection light on the second entrance/exit surface 10b is $\varepsilon$ (dB), RL may be approximated by the following Formula (1).

[Math. 9]

$$RL \cong \left[-4.11\ln(\varepsilon) + 97.7\right]\frac{\lambda}{nw} + \left[-0.175\ln(\varepsilon) + 9.6\right] \quad \cdots \quad (1)$$

Thus, when RL (dB) satisfies the following Formula (2), that is, Formula (3), the measurement error $\varepsilon$ can be made 1 dB or less.

[Math. 10]

$$RL \geq \left[-4.11\ln(1) + 97.7\right]\frac{\lambda}{nw} + \left[-0.175\ln(1) + 9.6\right] \quad \cdots \quad (2)$$

[Math. 11]

$$RL \geq 97.7\frac{\lambda}{nw} + 9.6 \quad \cdots \quad (3)$$

Further, when the angle $\theta$ (degree) satisfies the following Formula (4), the measurement error $\varepsilon$ can be made 0.5 dB or less.

[Math. 12]

$$RL \geq \left[-4.11\ln(0.5) + 97.7\right]\frac{\lambda}{nw} + \left[-0.175\ln(0.5) + 9.6\right] \quad \cdots \quad (4)$$

Further, when the angle $\theta$ (degree) satisfies the following Formula (5), the measurement error $\varepsilon$ can be made 0.1 dB or less.

[Math. 13]

$$RL \geq \left[-4.11\ln(0.1) + 97.7\right]\frac{\lambda}{nw} + \left[-0.175\ln(0.1) + 9.6\right] \quad \cdots \quad (5)$$

In the example shown in FIG. 6, the second entrance/exit surface 10b is inclined with respect to an imaginary plane H1 perpendicular to the central axis AX of the MCF 10, thereby reflecting the test light to emit the test light from the side surface of the glass fiber 11 to the outside, and suppressing the reflection of the test light back into the glass fiber 11. The second entrance/exit surface 10b in this example is a cleaved or polished flat surface. An end surface 131 of each of the cores 13a, 13b, 13c, and 13d is a surface aligned with the second entrance/exit surface 10b without a stepped portion. When an imaginary plane H2 parallel to the second entrance/exit surface 10b is defined, the center of the end surface 131 of each of the cores 13a, 13b, 13c, and 13d is in contact with the imaginary plane H2 on the second entrance/exit surface 10b. The imaginary plane H2 forms the angle $\theta$ with the imaginary plane H1 orthogonal to the central axis AX of the MCF 10. The angle $\theta$ is an angle defined by the radian method. In one example, the angle $\theta$ is equal to or more than 4 degrees and less than 90 degrees.

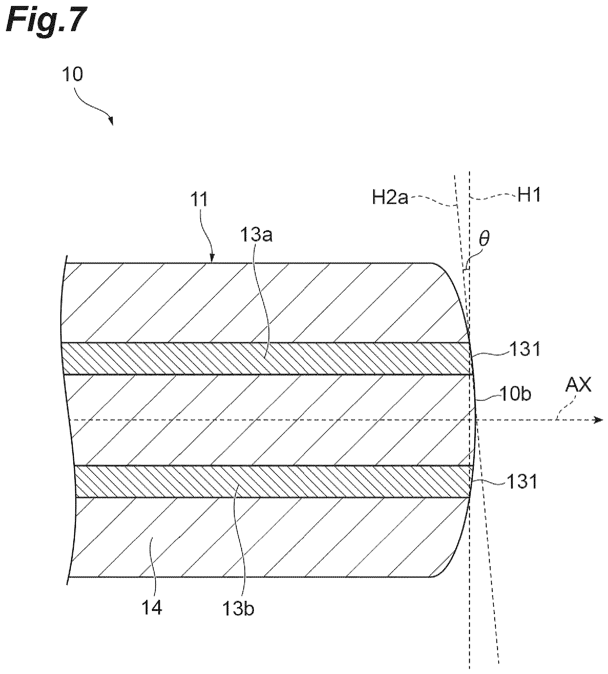

In the example shown in FIG. 7, the second entrance/exit surface 10b reflects the test light to emit the test light to the outside from the side surface of the glass fiber 11, and suppresses the reflection of the test light back into the glass fiber 11. However, the second entrance/exit surface 10b of this example is not flat, but is a curved surface that is convex outward, that is, toward the external medium. The second entrance/exit surface 10b is formed by, for example, polishing. The end surface 131 of each of the cores 13a, 13b, 13c, and 13d is a surface aligned with the second entrance/exit surface 10b without a stepped portion. For the second entrance/exit surface 10b, an imaginary plane H2a is defined so that the imaginary plane H2a is in contact with the center of the end surface 131 of one of the cores 13a, 13b, 13c, and 13d. At this time, the imaginary plane H2a forms the angle $\theta$ with the imaginary plane H1 orthogonal to the central axis AX of the MCF 10. The range of angle $\theta$ is the same as the configuration shown in FIG. 6.

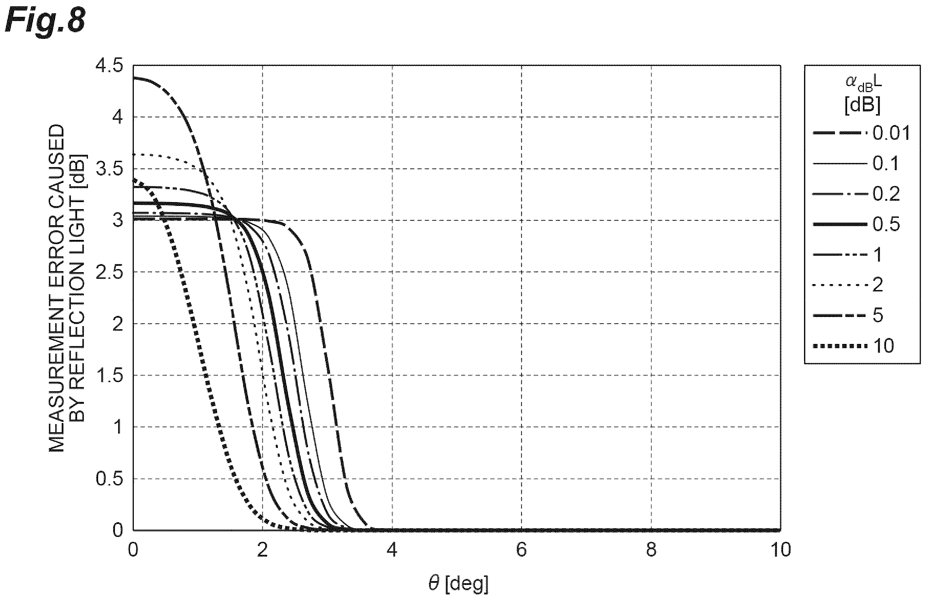

Here, the wavelength of the test light is denoted by $\lambda$ ($\mu$m), the mean value of the refractive indices of the cores 13a, 13b, 13c, and 13d of the MCF 10 is denoted by n, and 0.5 times the mean value of the mode field diameters of the cores 13a, 13b, 13c, and 13d is denoted by w ($\mu$m). FIG. 8 is a graph showing the relationship between the crosstalk measurement error caused by reflection light on the second entrance/exit surface 10b and the angle $\theta$ when n is equal to 1.444, $\lambda$ is equal to 1.55 ($\mu$m), and w is equal to 5 ($\mu$m$^2$). In FIG. 8, the horizontal axis represents the angle $\theta$ (degrees), and the vertical axis indicates the measurement error (dB). In the figure, curves are shown corresponding to the cases where $\alpha_{dB}\cdot L = 0.01$ dB, $\alpha_{dB}\cdot L = 0.1$ dB, $\alpha_{dB}\cdot L = 0.2$ dB, $\alpha_{dB}\cdot L = 0.5$ dB, $\alpha_{dB}\cdot L = 1$ dB, $\alpha_{dB}\cdot L = 2$ dB, $\alpha_{dB}\cdot L = 5$ dB, and $\alpha_{dB}\cdot L = 10$ dB. It is assumed that the second entrance/exit surface 10b is not in contact with liquid or solid but is exposed to gas, vacuum, or the like, whose refractive index can be approximated to 1.

Referring to FIG. 8, it can be seen that as the angle $\theta$ increases, the reflection light on the second entrance/exit surface 10b returning to the first entrance/exit surface 10a is gradually suppressed, and when the angle $\theta$ is equal to or more than a specific angle, the measurement error is sufficiently suppressed. It can be seen that the smaller the transmission loss $\alpha_{dB}\cdot L$ (dB) of the MCF 10 is, the larger the angle $\theta$ required to suppress the measurement error becomes.

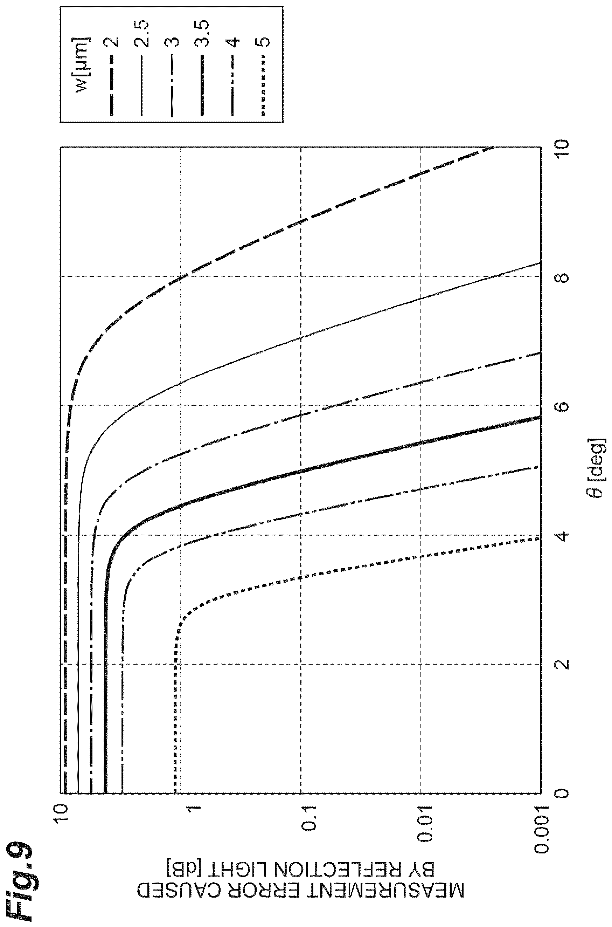

FIG. 9 is a graph showing the relationship between the crosstalk measurement caused by reflection light on the second entrance/exit surface 10b and the angle $\theta$ when n = 1.444, $\lambda$ = 1.55 ($\mu$m), and $\alpha_{dB}\cdot L$ = 0.01 (dB) are satisfied. In FIG. 9, the horizontal axis indicates the angle $\theta$ (degrees), and the vertical axis indicates the measurement error (dB). In the figure, curves are shown corresponding to the cases where w = 0.01 $\mu$m$^2$, w = 0.1 $\mu$m$^2$, w = 0.2 $\mu$m$^2$, w = 0.5 $\mu$m$^2$, w = 1 $\mu$m$^2$, w = 2 $\mu$m$^2$, w = 5 $\mu$m$^2$, and w = 10 $\mu$m$^2$. As in FIG. 8, it is assumed that the second entrance/exit surface 10b is not in contact with liquid or solid, but is exposed to gas, vacuum, or the like, whose refractive index can be approximated to 1.

Referring to FIG. 9, it can be seen that as the angle $\theta$ increases, the reflection light on the second entrance/exit surface 10b returning to the first entrance/exit surface 10a is gradually suppressed. It can be seen that the smaller the w ($\mu$m$^2$) is, the larger the angle $\theta$ required to suppress the measurement errors becomes.

When the transmission loss $\alpha_{dB}\cdot L$ is 0.01 dB or more, the refractive index n is 1.3 to 3, the wavelength $\lambda$ is 1.31 $\mu$m to 1.625 $\mu$m, and w is 2 $\mu$m to 8 $\mu$m, the angle $\theta$ (degrees) at which the crosstalk measurement error due to reflection light on the second entrance/exit surface 10b become $\varepsilon$ (dB) can be approximated by the following Formula (6).

[Math. 14]

$$\theta \cong \left[ -0.565\ln(\varepsilon) + 17.8 \right]\frac{\lambda}{nw} \qquad \cdots \ (6)$$

Thus, when the angle $\theta$ (degrees) satisfies the following Formula (7), that is, Formula (8), the measurement error $\varepsilon$ can be made 1 dB or less.

[Math. 15]

$$\theta \geq \left[ -0.565\ln(1) + 17.8 \right]\frac{\lambda}{nw} \qquad \cdots \ (7)$$

[Math. 16]

$$\theta \geq 17.8\frac{\lambda}{nw} \qquad \cdots \ (8)$$

Further, when the angle $\theta$ (degree) satisfies the following Formula (9), the measurement error $\varepsilon$ can be made 0.5 dB or less.

[Math. 17]

$$\theta \geq \left[ -0.565\ln(0.5) + 17.8 \right]\frac{\lambda}{nw} \qquad \cdots \ (9)$$

Further, when the angle θ (degree) satisfies the following Formula (10), the measurement error ε can be made 0.1 dB or less.
[Math. 18]

$$\theta \geq \left[-0.565\ln(0.1)+17.8\right]\frac{\lambda}{nw} \qquad \cdots \quad (10)$$

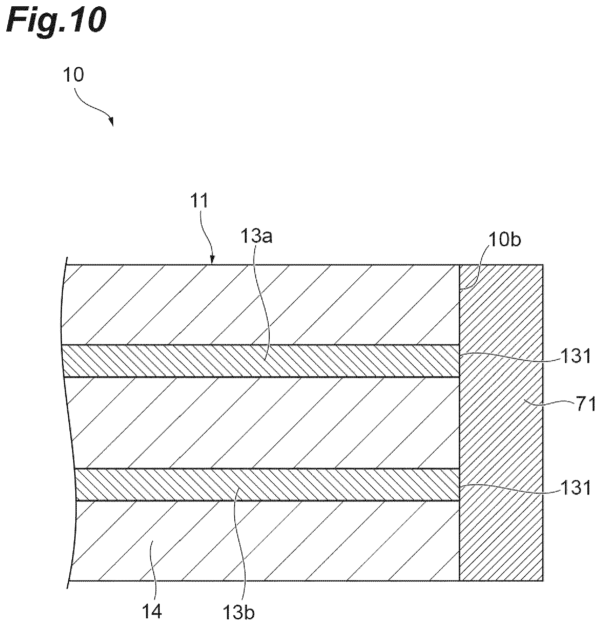

In the example shown in FIG. 10, the second entrance/exit surface 10b is provided with an anti-reflective film 71 (index matching film). The anti-reflective film 71 is a solid film including a substance having a refractive index matching the refractive index of the glass fiber 11 and is in contact with the second entrance/exit surface 10b. The substance constituting the anti-reflective film 71 is, for example, a dielectric material. The anti-reflective film 71 constitutes a light reflection suppressor configured to suppress reflection of test light back into the glass fiber 11.

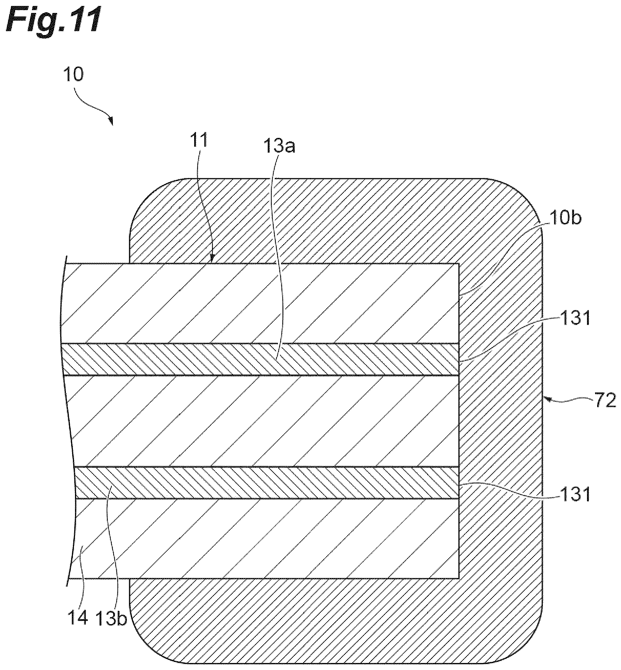

In the example shown in FIG. 11, the second entrance/exit surface 10b is provided with an anti-reflective material 72. The anti-reflective material 72 includes a substance having a refractive index matching the refractive index of the glass fiber 11, and is in contact with the second entrance/exit surface 10b. The anti-reflective material 72 is provided from the second entrance/exit surface 10b to the side surface of the glass fiber 11, and surrounds the second entrance/exit surface 10b. The substance constituting the anti-reflective material 72 is, for example, an alicyclic compound or an aliphatic compound. The anti-reflective material 72 may be solid, liquid, or gel. The anti-reflective material 72 constitutes a light reflection suppressor configured to suppress reflection of the test light into the glass fiber 11.

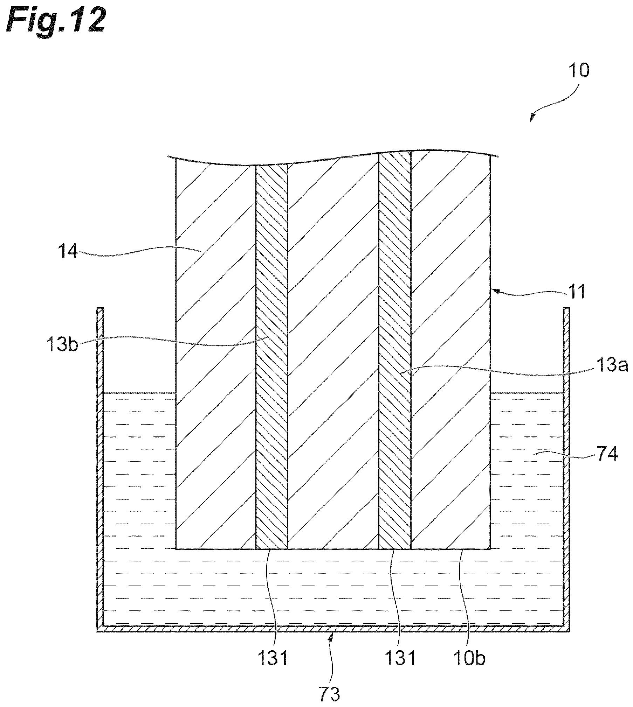

In the example shown in FIG. 12, the second entrance/exit surface 10b is immersed in a liquid 74. The liquid 74 is contained in a container 73 having an opening at the top, and the second entrance/exit surface 10b is immersed in the liquid 74 from above. The liquid 74 includes a substance having a refractive index matching the refractive index of the glass fiber 11, and is in contact with the second entrance/exit surface 10b. The substance constituting the liquid 74 is, for example, an alicyclic compound or an aliphatic compound. The liquid 74 constitutes a light reflection suppressor configured to suppress reflection of the test light into the glass fiber 11.

In the examples shown in FIGS. 10, 11 and 12, the mean value of the refractive indices of the cores 13a, 13b, 13c and 13d in the MCF 10 is denoted by n, and the refractive index of the substance having a refractive index matching the refractive index of the glass fiber 11 is denoted by n0. Then, the relative refractive index difference Δ0 is defined as Δ0 = |n - n0|/n0. At this time, in order to suppress the measurement error ε (dB) to be small, the relative refractive index difference Δ0 may be made small. In this case, as the transmission loss $\alpha_{dB}$·L is decreased, the relative refractive index difference Δ0 needs to be decreased. As the angle θ is closer to 0 degree, the relative refractive index difference Δ0 needs to be smaller. As the refractive index n increases, the relative refractive index difference Δ0 needs to be decreased. The shorter the wavelength λ is, the smaller the relative refractive index difference Δ0 needs to be. As w increases, the relative refractive index difference Δ0 needs to be decreased.

When the relationship between the relative refractive index difference Δ0 and $\alpha_{dB}$·L (dB) satisfies the following Formula (11), the measurement error ε can be 1 dB or less.
[Math. 19]

$$\Delta 0 \leq 1.14 \times 10^{-2} \left(\alpha_{dB} L\right)^{0.473} \qquad \cdots \quad (11)$$

Further, when the relationship between the relative refractive index difference Δ0 and $\alpha_{dB}$·L (dB) satisfies the following Formula (12), the measurement error ε can be 0.5 dB or less.
[Math. 20]

$$\Delta 0 \leq 8.10 \times 10^{-2} \left(\alpha_{dB} L\right)^{0.482} \qquad \cdots \quad (12)$$

Further, when the relationship between the relative refractive index difference Δ0 and $\alpha_{dB}$·L (dB) satisfies the following Formula (13), the measurement error ε can be 0.1 dB or less.
[Math. 21]

$$\Delta 0 \leq 3.63 \times 10^{-3} \left(\alpha_{dB} L\right)^{0.502} \qquad \cdots \quad (13)$$

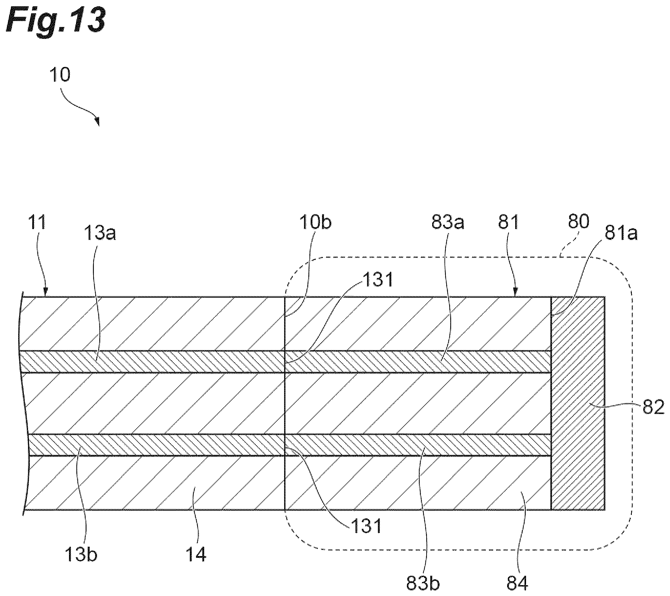

In the example shown in FIG. 13, the measurement apparatus 1A, 1B or 1C further includes an anti-reflective device 80 provided on the second entrance/exit surface 10b of the MCF 10. The anti-reflective device 80 includes an MCF 81 different from the MCF 10, and an anti-reflective film 82 provided on a first end surface 81a of the MCF 81. The anti-reflective film 82 is, for example, a dielectric multilayer film. The second end surface of the MCF 81 is connected to the second entrance/exit surface 10b. That is, the MCF 81 has the same number of cores (only two cores 83a and 83b are illustrated in the figure) as the cores 13a, 13b, 13c, and 13d of the MCF 10, and these cores are optically coupled to the cores 13a, 13b, 13c, and 13d of the MCF 10. The connection between the MCF 81 and the MCF 10 may be fusion-splicing or may be a connection by an optical connector. In this example, the anti-reflective film 82 constitutes a light reflection suppressor configured to suppress reflection of the test light back into the glass fiber 11.

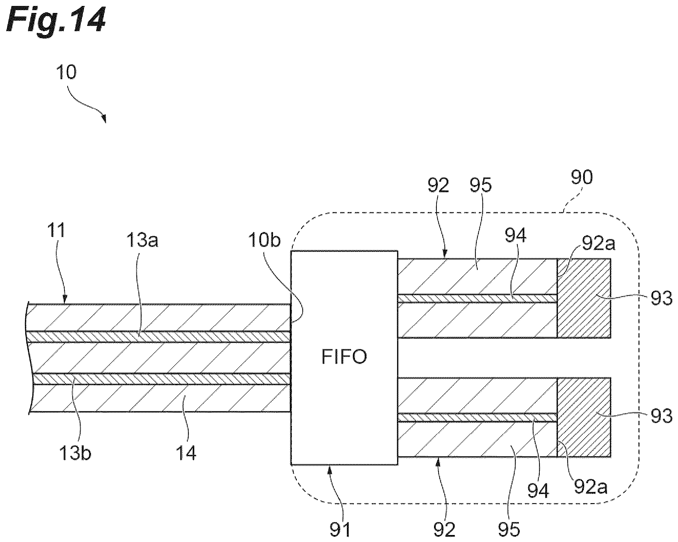

In the example shown in FIG. 14, the measurement apparatus 1A, 1B or 1C further includes an anti-reflective device 90 provided on the second entrance/exit surface 10b of the MCF 10. The anti-reflective device 90 includes single-core optical fibers (SCFs) 92, the number of which is the same as the number of the cores 13a, 13b, 13c, and 13d in of MCF 10, and a FIFO 91. An anti-reflective film 93 serving as a light reflection suppressor that suppresses reflection of the test light into the SCF 92 is provided on a first end surface 92a of each SCF 92. The anti-reflective film 93 is, for example, a dielectric multilayer film. The second end surface of each of SCFs 92 is optically coupled to a corresponding one of the cores 13a, 13b, 13c, and 13d on the second entrance/exit surface 10b via the FIFO 91.

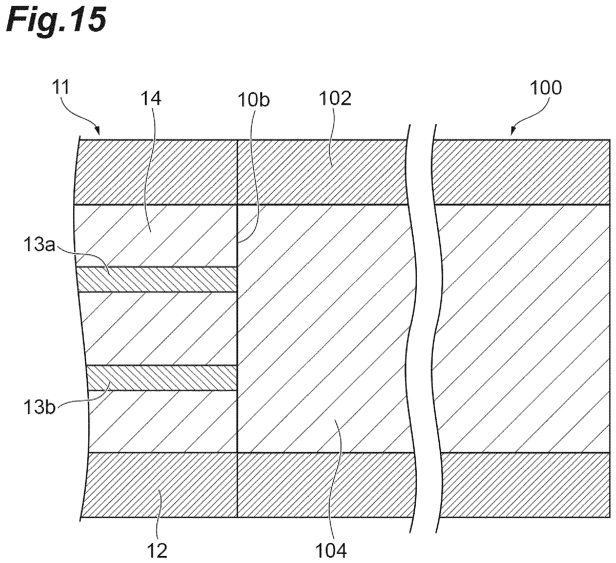

In the example shown in FIG. 15, the measurement apparatus 1A, 1B or 1C further includes another optical fiber 100 as a light reflection suppressor provided on the second entrance/exit surface 10b of the MCF 10. The optical fiber 100 includes a cladding 104 mainly including the same material as the cladding 14 of the MCF 10, and a coating resin 102 coating the cladding 104. A first end surface of the optical fiber 100 is fusion-spliced to the second entrance/exit surface 10b of the MCF 10. A second end surface of the optical fiber 100 is exposed. The optical fiber 100 has no core. That is, the glass fiber of the optical fiber 100 is formed only of the cladding 104. Thus, the optical fiber 100 does not have any spatial channel (core) matched with the core 13a, 13b, 13c, or 13d of the MCF 10. The cores 13a, 13b, 13c, and 13d of the MCF 10 are in contact with only the cladding 104 of the optical fiber 100.

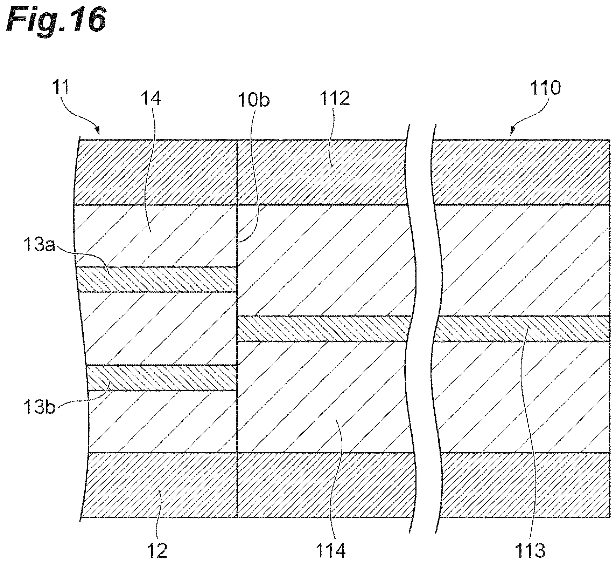

In the example shown in FIG. 16, the measurement apparatus 1A, 1B or 1C further includes another optical fiber 110 as a light reflection suppressor provided on the second entrance/exit surface 10b of the MCF 10. The optical fiber 110 includes a core 113, a cladding 114 covering the core 113 and mainly including the same material as the cladding 14 of the MCF 10, and a coating resin 112 coating the cladding 114. The first end surface of the optical fiber 110 is fusion-spliced to the second entrance/exit surface 10b of the MCF 10. A second end surface of the optical fiber 110 is exposed. The core 113 is not aligned with any of the cores 13a, 13b, 13c, or 13d in the MCF 10. That is, the optical fiber 110 does not have any spatial channel aligned with the core 13a, 13b, 13c, or 13d of the MCF 10. The cores 13a, 13b, 13c, and 13d in the MCF 10 are in contact with only the cladding 114 of the optical fiber 110.

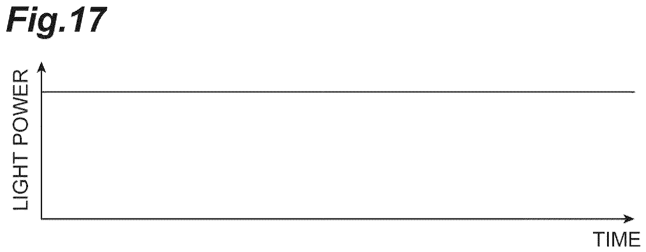

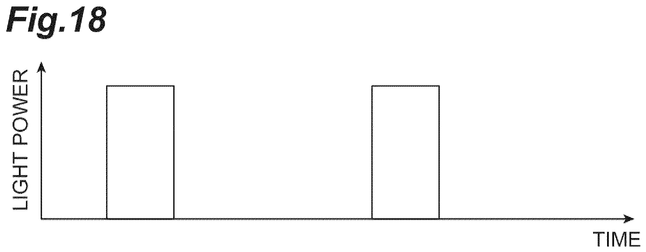

Reference is made again to FIG. 1. The test light output from the light source unit 20A may be either continuous light or chopped light. FIG. 17 is a graph schematically showing a time waveform of light power of continuous light. When the test light is continuous light, the light power is constant and independent of time. In addition, when the test light is continuous light, commonly used optical power meters can be used as the light receiver 31, 33, 34, and 35. FIG. 18 is a graph schematically showing a time waveform of light power of chopped light. When the test light is chopped light, the time waveform of the light power is a rectangular waveform. The duty ratio (the ratio of the time during which the light power is at a peak to the total time) is, for example, 0.5 or 0.25. When the test light is chopped light, optical power meters applicable to chopping detection (synchronous detection and phase detection) are used as the light receivers 31, 33, 34, and 35, and thus, the detection can be performed while measurement noise caused by environmental light or the like is suppressed, and detection sensitivity can be increased.

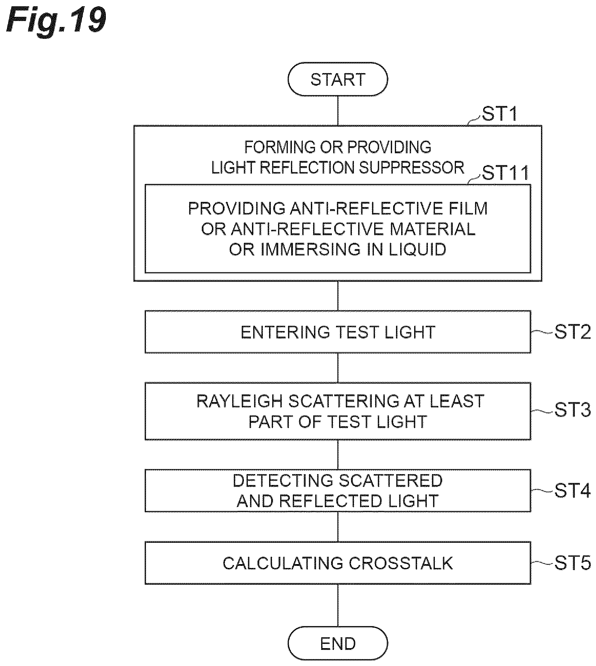

Next, the operation of the measurement apparatus 1A, 1B, or 1C according to the embodiment will be described, and the inter-spatial-channel crosstalk measurement method of the embodiment using the measurement apparatus 1A, 1B, or 1C will be described. FIG. 19 is a flowchart showing an inter-spatial-channel crosstalk measurement method according to the embodiment.

First, as step ST1, a light reflection suppressor is formed or provided on the second entrance/exit surface 10b. Examples of light reflection suppressors are described in FIGS. 6 to 16. That is, the step ST1 may include step ST11 of providing the anti-reflective film 71 (see FIG. 10) or the anti-reflective material 72 (see FIG. 11) on the second entrance/exit surface 10b or immersing the second entrance/exit surface 10b in the liquid 74 (see FIG. 12).

Next, as step ST2, test light is caused to enter any one core (first spatial channel, here, the core 13a as an example) of the cores 13a, 13b, 13c, and 13d in the first entrance/exit surface 10a from the light source unit 20A or 20B. At this time, in the light source unit 20A (see FIGS. 1 and 4), the first optical switch 22 is switched to cause the test light to enter the core 13a. The first optical switch 22 may be switched by a control signal from the calculation unit 60 or may be manually switched. In the light source unit 20B (see FIG. 5), the test light enters from the light source 23 corresponding to the core 13a among the light sources 23, 24, 25, and 26.

Subsequently, as step ST3, at least part of the test light is caused to undergo Rayleigh backscattering in the MCF 10.

Thereafter, part of the light having undergone Rayleigh backscattering in the MCF 10 is emitted from the core 13a, and another part is emitted from a core (second spatial channel or second core, here, each of the cores 13b, 13c, and 13d) different from the core 13a due to the crosstalk between the cores. In step ST4, a first optical power, which is the power of the light emitted from the core 13a, and a second optical power, which is the power of the light emitted from each of the cores 13b, 13c, and 13d, are detected. At this time, in the optical detection unit 30A (see FIGS. 1 and 5), the second optical switch 32 is switched to sequentially cause the light from the cores 13a, 13b, 13c, and 13d to enter the light receiver 31. The second optical switch 32 may be switched by a control signal from the calculation unit 60 or may be manually switched. In the optical detection unit 30B (see FIG. 4), the lights from the cores 13a, 13b, 13c, and 13d are caused to enter the light receivers 33, 34, 35, and 36 corresponding to the cores 13a, 13b, 13c, and 13d, respectively.

The first optical power is a total sum of optical power components emitted from the core 13a (first spatial channel) among return optical power components of the test light including backscattered light at each position in a longitudinal direction of the MCF 10. The second optical power is a total sum of optical power components emitted from each of the cores 13b, 13c, and 13d (second spatial channel) among the return optical power components of the test light including the backscattered light at each position in the longitudinal direction of the MCF 10.

Subsequently, in step ST5, a magnitude of crosstalk between the core 13a and the cores 13b, 13c, and 13d is calculated by the calculation unit 60, based on the first optical power and the second optical power. At this time, a magnitude XT of crosstalk between the core 13a and the cores 13b, 13c, or 13d is calculated by, for example, the following Formula (14) based on a first optical power PW1 and a second optical power PW2.
[Math. 22]

$$ XT = \frac{PW2}{PW1} \frac{\left[ \dfrac{\exp(2\alpha L) - 1}{2} \right]}{\left[ \dfrac{\exp(2\alpha L) - 1}{2\alpha L} - 1 \right]} \qquad \cdots \quad (14) $$

Here, $\alpha$ (km$^{-1}$) is a mean value of the transmission loss coefficient of the cores 13a, 13b, 13c, and 13d. L (km) is a length of the MCF 10.

When the first optical power PW1 is measured, the power of light emitted from the core 13a on the first entrance/exit surface 10a is measured. At this time, the light emitted from the core 13a hardly includes the light reflected on the second entrance/exit surface 10b, and mainly includes the light having undergone Rayleigh backscattering in the MCF 10. Similarly, when the second optical power PW2 is measured, the power of light emitted from each of the cores 13b, 13c, and 13d on the first entrance/exit surface 10a is measured. At this time, the light emitted from each of the cores 13b, 13c, and 13d hardly includes the light reflected on the second entrance/exit surface 10b, and mainly includes the light having undergone Rayleigh backscattering in the MCF 10.

The above-described steps ST2 to ST5 are sequentially repeated with the cores 13a, 13b, 13c, and 13d as the first core (first spatial channel) on which the test light enters.

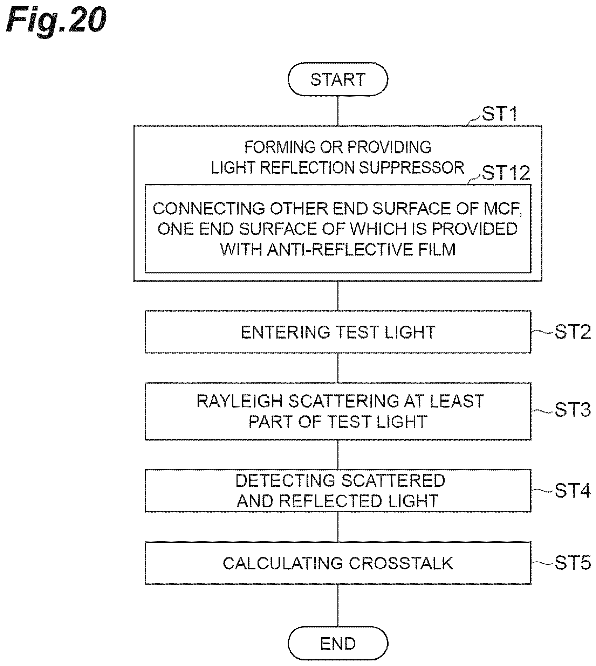

FIG. 20 is a flowchart showing a modification of the inter-spatial-channel crosstalk measurement method. In this modification, the step ST1 of forming or providing a light reflection suppressor on the second entrance/exit surface 10b includes step ST12 instead of the step ST11 described above. In the step ST12, as shown in FIG. 13, the second end surface of the MCF 81, on which the anti-reflective film 82 serving as a light reflection suppressor is provided on the first end surface 81a, is connected to the second entrance/exit surface 10b.

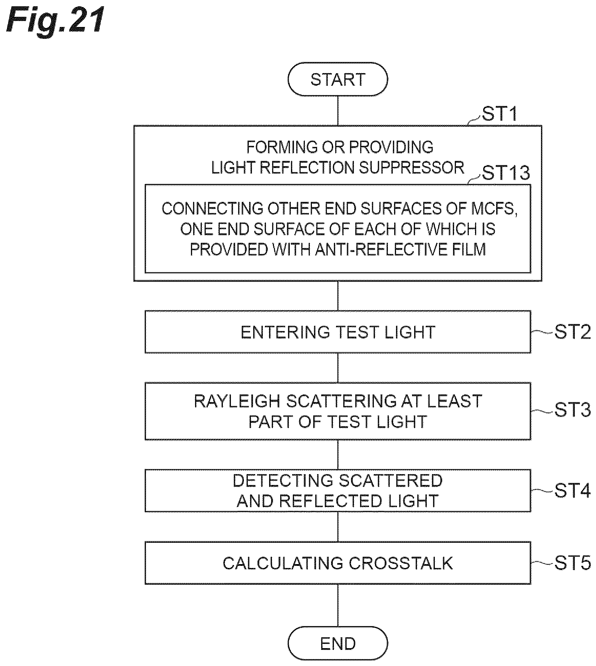

FIG. 21 is a flowchart showing another modification of the inter-spatial-channel crosstalk measurement method. In this modification, the step ST1 of forming or providing a light reflection suppressor on the second entrance/exit surface 10b includes step ST13 instead of the step ST11 described above. In the step ST13, as shown in FIG. 14, the second end surface of each of the plurality of SCFs 92, each having the first end surface 92a on which the anti-reflective film 93 serving as light reflection suppressor is provided, is optically coupled to a corresponding one of the cores 13a, 13b, 13c, and 13d on the second entrance/exit surface 10b.

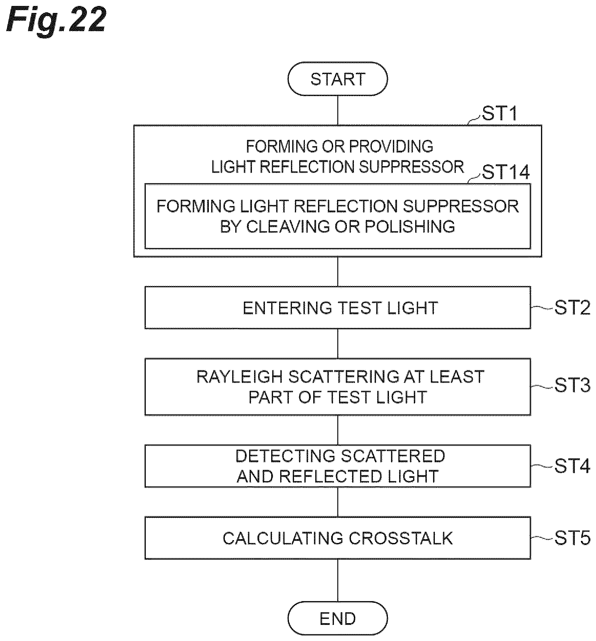

FIG. 22 is a flowchart showing still another modification of the inter-spatial-channel crosstalk measurement method. In this modification, the step ST1 of forming or providing a light reflection suppressor on the second entrance/exit surface 10b includes step ST14 instead of the step ST11 described above. In the step ST14, as shown in FIG. 6 or FIG. 7, the second entrance/exit surface 10b is made flat or curved by polishing, cleaving, or the like, and is used as a light reflection suppressor. Alternatively, the substantially flat second entrance/exit surface 10b which is merely cleaved may be used as the light reflection suppressor.

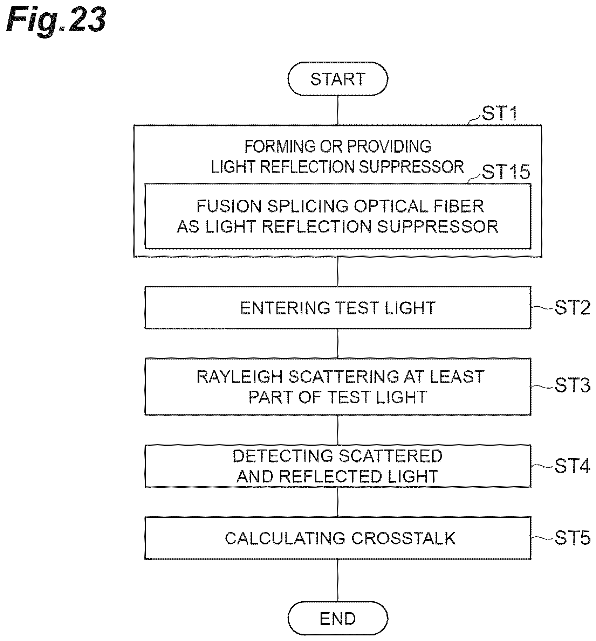

FIG. 23 is a flowchart showing yet another modification of the inter-spatial-channel crosstalk measurement method. In this modification, the step ST1 of forming or providing a light reflection suppressor on the second entrance/exit surface 10b includes step ST15 instead of the step ST11 described above. In the step ST15, as shown in FIG. 15 or FIG. 16, the optical fiber 100 or 110 as a light reflection suppressor is fusion-spliced to the second entrance/exit surface 10b.

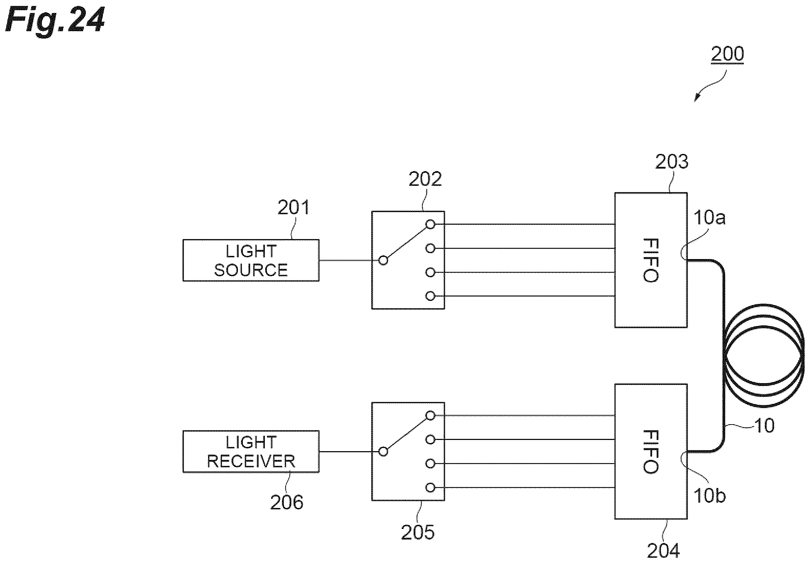

The effects obtained by the measurement apparatuses 1A, 1B, and 1C and the inter-spatial-channel crosstalk measurement method according to the embodiment described above will be described. FIG. 24 is a diagram schematically showing a configuration of a measurement apparatus 200 according to a reference example. The measurement apparatus 200 shown in FIG. 24 is an apparatus for measuring inter-core crosstalk of the MCF 10, and includes a single light source 201, a first optical switch 202, a FIFO 203, a FIFO 204, a second optical switch 205, and a single light receiver 206. The light source 201, the first optical switch 202 and the FIFO 203 are connected to the first entrance/exit surface 10a of the MCF 10. The FIFO 204, the second optical switch 205 and the light receiver 206 are connected to the second entrance/exit surface 10b of the MCF 10. The test light output from the light source 201 enters the first core (first spatial channel) selected by the first optical switch 202 among the plurality of cores included in the MCF 10 on the first entrance/exit surface 10a. In the second entrance/exit surface 10b, the second optical switch 205 sequentially selects the first core on which the test light enters and a second core (second spatial channel) different from the first core. The light power of the test light propagated through the first core and the light power of the crosstalk light propagated through the second core are detected by the light receiver 206. Based on these light powers, the inter-core crosstalk is calculated.

In the measurement apparatus 200 shown in FIG. 24, test light is caused to enter the first core on the first entrance/exit surface 10a of the MCF 10, and the power of the test light emitted from the first core and the second core on the second entrance/exit surface 10b of the MCF 10 is detected. However, when the MCF 10 to be measured has been laid, it may not be easy to connect the unit including the light source 201, the first optical switch 202, and the FIFO 203 to the first entrance/exit surface 10a of the MCF 10 and to connect the unit including the FIFO 204, the second optical switch 205, and the light receiver 206 to the second entrance/exit surface 10b of the MCF 10, which is far away from the first entrance/exit surface 10a.

In the measurement apparatuses 1A, 1B, and 1C and the measurement method of the embodiment, it is sufficient to connect the light source unit 20A or 20B and the optical detection unit 30A or 30B to the first entrance/exit surface 10a of the MCF 10, and it is not necessary to connect any of them to the second entrance/exit surface 10b. Thus, for example, even in the MCF 10 in which the first entrance/exit surface 10a and the second entrance/exit surface 10b are separated from each other by several kilometers or more, the light source unit 20A or 20B and the optical detection unit 30A or 30B can be easily connected to the MCF 10. Furthermore, by reducing the number of connections in the measurements by half, crosstalk measurement of the MCF 10 can be efficiently performed. In addition, the level of the detection signal can be increased and the crosstalk measurement accuracy can be improved, by detecting, for example, as in the embodiment, the total sum of the backward Rayleigh scattering light, instead of performing the position resolution of the backward Rayleigh scattering light component. At this time, if the light reflection suppressor is not provided, part of the test light may be reflected on the second entrance/exit surface 10b, and the reflected test light may be mixed into the backward Rayleigh scattering light. Since the power of the backward Rayleigh scattering light is very small, in such a case, there is a possibility that the accuracy of crosstalk measurement cannot be increased. In the measurement apparatus 1A, 1B, and 1C and the measurement method of the embodiment, a light reflection suppressor configured to suppress reflection of test light is formed or provided on the second entrance/exit surface 10b. Thus, since reflection of part of the test light on the second entrance/exit surface 10b can be reduced, mixing of the reflection light into the backward Rayleigh scattering light can be reduced. Thus, it is possible to measure the inter-channel crosstalk with high accuracy.

As described above, the magnitude XT of crosstalk may be calculated using Formula (14). For example, by using such a calculation formula, the magnitude of crosstalk can be calculated only from the total sum of the power of backward Rayleigh scattering light from the first entrance/exit surface 10a to the second entrance/exit surface 10b.

As described above, $\alpha_{dB} \cdot L$ (dB) may 0.01 dB or more. This allows the backward Rayleigh scattering light having a power of a sufficiently measurable level to return to the first entrance/exit surface 10a.

As described above, the return loss RL (dB) caused by the reflection on the second entrance/exit surface 10b may satisfy Formula (3). This makes it possible to reduce the measurement errors caused by reflection of the test light on the second entrance/exit surface 10b to 1 dB or less.

As described above, the light reflection suppressor may be configured to suppress reflection of the test light on the second entrance/exit surface 10b of the MCF 10. At this time, the angle $\theta$ (degrees) formed by the imaginary plane H2 and the imaginary plane H1 shown in FIG. 6 may satisfy Formula (16). This makes it possible to reduce the measurement errors caused by reflection of the test light on the second entrance/exit surface 10b to 1 dB or less.

As described above, the step ST1 of forming or providing the light reflection suppressor on the second entrance/exit surface 10b may include the step ST14 of forming the light reflection suppressor by forming the second entrance/exit surface 10b by cleaving the MCF 10. Thus, the light reflection suppressor may be easily formed on the second entrance/exit surface 10b.

As described above, the step ST1 of forming or providing the light reflection suppressor on the second entrance/exit surface 10b may include the step ST14 of forming the light reflection suppressor by polishing the second entrance/exit surface 10b of the MCF 10. Thus, the light reflection suppressor can be easily formed on the second entrance/exit surface 10b.

As described above, the light reflection suppressor may include a substance having a refractive index matching the refractive index of the MCF 10, and the substance is in contact with the second entrance/exit surface 10b of the MCF 10. Similarly, the step ST1 of forming or providing the light reflection suppressor on the second entrance/exit surface 10b may include the step ST11 of providing the light reflection suppressor by bringing a substance having a refractive index matching the refractive index of the MCF 10 into contact with the second entrance/exit surface 10b of the MCF 10. Thus, the light reflection suppressor can be easily provided on the second entrance/exit surface 10b.

As described above, the substance having a refractive index matching the refractive index of the MCF 10 may be a liquid, a gel, or a solid.

As described above, the light reflection suppressor may include another optical fiber 100 (or 110) having the cladding 104 (or 114) mainly including the same material as the cladding 14 of the MCF 10. The step ST1 may include the step ST15 of fusion-splicing the end surface of the optical fiber 100 (or 110) to the second entrance/exit surface 10b of the MCF 10. The optical fiber 100 (or 110) after fusion-splicing does not have to have a spatial channel (core) matched with the cores 13a, 13b, 13c, and 13d of the MCF 10. Thus, the light reflection suppressor can be easily provided on the second entrance/exit surface 10b.

As described above, each of the measurement apparatuses 1A, 1B, and 1C may include the MCF 81 in which the anti-reflective film 82 serving as a light reflection suppressor is provided on the first end surface 81a. The second end surface of the MCF 81 is connected to the second entrance/exit surface 10b at the second entrance/exit surface 10b. Similarly, in the measurement method, the step ST1 may include the step ST12 of connecting the second end surface of the MCF 81, in which the anti-reflective film 82 serving as a light reflection suppressor is provided on the first end surface 81a, to the second entrance/exit surface 10b. According to the measurement apparatuses 1A, 1B, and 1C and the measurement method, it is possible to reduce the reflectance in the light reflection suppressor and measure crosstalk with higher accuracy. Further, since it is not necessary to provide a light anti-reflective film on the second entrance/exit surface 10b, and it is sufficient to connect the MCF 81 to the second entrance/exit surface 10b, the measurement operation can be facilitated.

As described above, each of the measurement apparatuses 1A, 1B, and 1C may include the same number of the SCFs 92 as the cores 13a, 13b, 13c, and 13d, each having the anti-reflective film 93 serving as the light reflection suppressor provided on the first end surface 92a. The second end surface of each of the SCFs 92 is optically coupled to a corresponding one of the cores 13a, 13b, 13c, and 13d on the second entrance/exit surface 10b. Similarly, in the measurement method, the step ST1 may include the step ST13 of optically coupling the second end surface of each of the SCFs 92, the number of which is the same as the number of the cores 13a, 13b, 13c, and 13d, to a corresponding one of the cores 13a, 13b, 13c, and 13d on the second entrance/exit surface 10b, each of the SCFs 92 having the first end surface 92a on which the anti-reflective film 93 serving as the light reflection suppressor is provided. According to the measurement apparatuses 1A, 1B, and 1C and the measurement method, it is possible to reduce the reflectance in the light reflection suppressor and measure crosstalk with higher accuracy. Further, since it is not necessary to provide a light anti-reflective film on the second entrance/exit surface 10b, and it is sufficient to connect an optical component such as the FIFO 91 to the second entrance/exit surface 10b, the measurement operation can be facilitated.

As described above, in each of the measurement apparatuses 1A, 1B, and 1C, the second entrance/exit surface 10b may be used as a light reflection suppressor. This eliminates the need for a special device such as the anti-reflective devices 80 or 90, and the configuration of the measurement apparatus can be simplified.

As in the embodiment, each of the measurement apparatus 1A, 1B, and 1C may include the three-port optical couplers 41, 42, 43, and 44 and the FIFO 50. The three-port optical couplers 41, 42, 43, and 44 have the first port P1, the second port P2, and the third port P3, output light input to the first port P1 from the second port P2, and output light input to the second port P2 from the third port P3. The FIFO 50 optically couples each of the cores 13a, 13b, 13c, and 13d in the first entrance/exit surface 10a of the MCF 10 to the second port P2 of a corresponding one of the three-port optical couplers 41, 42, 43, and 44. The light source unit 20A or 20B is optically coupled to the first port P1 of the three-port optical coupler 41, 42, 43, 44. The optical detection unit 30A or 30B is optically coupled to the third ports P3 of the three-port optical coupler 41, 42, 43, 44. This makes it possible to easily realize a configuration in which the test light from the light source unit 20A or 20B enters each of the cores 13a, 13b, 13c, and 13d, and the light emitted from the core on which the test light has entered and the light emitted from another core are detected by the optical detection unit 30A or 30B.

As in the measurement apparatus 1C shown in FIG. 5, the light source unit 20B may include the same number of light sources 23, 24, 25, and 26 as the cores 13a, 13b, 13c, and 13d, and each of the light sources 23, 24, 25, and 26 may be optically coupled to the first port P1 of a corresponding one of the three-port optical couplers 41, 42, 43, and 44. Thus, the test light can be input to the first port P1 of each of the three-port optical couplers 41, 42, 43, 44 with a simple configuration.

As in the measurement apparatus 1A shown in FIG. 1, the light source unit 20A may include the single light source 21 and the first optical switch 22 that selectively optically couples the single light source 21 to the first port P1 of one of the three-port optical coupler 41, 42, 43, or 44. This can reduce the number of light sources.

As in the measurement apparatus 1B shown in FIG. 4, the optical detection unit 30B may include the light receivers 33, 34, 35, and 36, the number of which is the same as the number of cores 13a, 13b, 13c, and 13d, and each of the light receivers 33, 34, 35, and 36 may be optically coupled to the third port P3 of a corresponding one of the three-port optical couplers 41, 42, 43, and 44. Thus, the light output from the third port P3 of each of the three-port optical couplers 41, 42, 43, and 44 can be detected with a simple configuration.

As in the measurement apparatus 1A shown in FIG. 1, the optical detection unit 30A may include the single light receiver 31 and the second optical switch 32 that selectively optically couples the single light receiver 31 to the third port P3 of one of the three-port optical couplers 41, 42, 43, or 44. This makes it possible to reduce the number of light receivers.

The inter-core crosstalk of the FIFO 50 may be 0.259 times or less, 0.122 times or less, 0.047 times or less, or 0.023 times or less the inter-core crosstalk of the MCF 10. Thus, the inter-core crosstalk measurement errors of the MCF 10 caused by the inter-core crosstalk of the FIFO 50 can be respectively set to 1 dB or less, 0.5 dB or less, 0.2 dB or less, or 0.1 dB or less, and the inter-core crosstalk of the MCF 10 can be measured with higher accuracy.

The inter-spatial-channel crosstalk measurement method and the inter-spatial-channel crosstalk measurement apparatus according to the present disclosure are not limited to the above-described embodiments and modifications, and various other modifications are possible. For example, the form of the light reflection suppressor on the second entrance/exit surface 10b of the MCF 10 is not limited to the above-described embodiment. The number of cores in the MCF 10 is not limited to the above-described embodiment.

REFERENCE SIGNS LIST

1A, 1B, 1C measurement apparatus
10 multi-core optical fiber (MCF)
10a first entrance/exit surface
10b second entrance/exit surface
11 glass fiber
12 coating resin
13a, 13b, 13c, 13d core
14 cladding
15 marker
20A, 20B light source unit
21, 23, 24, 25, 26 light source
22 first optical switch
22a input port
22b, 22c, 22d, 22e output port
30A, 30B optical detection unit
31 light receiver
32 second optical switch
32a output port
32b, 32c, 32d, 32e input port
33, 34, 35, 36 light receiver
40 optical coupler unit
41, 42, 43, 44 three-port optical coupler
50 FIFO
50a, 50b, 50c, 50d, 50e input/output port
60 calculation unit
71 anti-reflective film
72 anti-reflective material
73 container
74 liquid
80, 90 anti-reflective device
81 multi-core optical fiber (MCF)
81a, 92a first end surface
82, 93 anti-reflective film
91 FIFO
92 single-core optical fiber
100, 110 optical fiber
102, 112 coating resin
104, 114 cladding

113 core
131 end surface
200 measurement apparatus
201 light source
202 first optical switch
203, 204 FIFO
205 second optical switch
206 light receiver
AX central axis
H1, H2, H2a imaginary plane
L1, L2 light
P1 first port
P2 second port
P3 third port
ST1, ST2, ST3, ST4, ST5, ST11, ST12, ST13, ST14, ST15 step
θ angle

**Claims**

1. An inter-spatial-channel crosstalk measurement method for measuring crosstalk between spatial channels of a space division multiplexing optical fiber having a first entrance/exit surface and a second entrance/exit surface and having a first spatial channel and a second spatial channel, the inter-spatial-channel crosstalk measurement method comprising:

   a first step of forming or providing, on the second entrance/exit surface, a light reflection suppressor configured to suppress reflection of test light;
   a second step of causing the test light to enter the first spatial channel on the first entrance/exit surface;
   a third step of causing at least part of the test light to undergo Rayleigh backscattering in the space division multiplexing optical fiber;
   a fourth step of detecting a first optical power and a second optical power, the first optical power being a power of light of the at least part of the test light and being a power of light emitted from the first spatial channel on the first entrance/exit surface, the second optical power being a power of light of the at least part of the test light and being a power of light emitted from the second spatial channel on the first entrance/exit surface; and
   a fifth step of calculating a magnitude of crosstalk between the first spatial channel and the second spatial channel, based on the first optical power and the second optical power.

2. The inter-spatial-channel crosstalk measurement method according to claim 1, wherein

   the test light is continuous light or chopped light,
   the first optical power is a total sum of optical power components emitted from the first spatial channel among return optical power components of the test light including backscattered light at each position in a longitudinal direction of the space division multiplexing optical fiber, and
   the second optical power is a total sum of optical power components emitted from the second spatial channel among the return optical power components of the test light including backscattered light at each position in the longitudinal direction of the space division multiplexing optical fiber.

3. The inter-spatial-channel crosstalk measurement method according to claim 1 or 2, wherein in the fifth step, a magnitude XT of the crosstalk is calculated using Formula (A) below, where PW1 denotes the first optical power, PW2 denotes the second optical power, $\alpha$ (km$^{-1}$) denotes a mean value of transmission loss coefficients of the first spatial channel and the second spatial channel, and L (km) denotes a length of the space division multiplexing optical fiber.
   [Math. 1]

$$XT = \frac{PW2}{PW1} \frac{\left[\dfrac{\exp(2\alpha L)-1}{2}\right]}{\left[\dfrac{\exp(2\alpha L)-1}{2\alpha L}-1\right]} \quad \cdots \quad (A)$$

4. The inter-spatial-channel crosstalk measurement method according to any one of claims 1 to 3, wherein when a loss coefficient $\alpha_{dB}$ of each of the first spatial channel and the second spatial channel is defined as $\alpha_{dB}$ (dB/km) = (10/ln10) $\alpha$, $\alpha_{dB}\cdot$L (dB) is 0.01 dB or more.

5. The inter-spatial-channel crosstalk measurement method according to any one of claims 1 to 4, wherein

the light reflection suppressor is configured to suppress reflection of the test light on the second entrance/exit surface of the space division multiplexing optical fiber, and
when a wavelength of the test light is denoted by $\lambda$ ($\mu$m), a mean value of refractive indices of the first spatial channel and the second spatial channel of the space division multiplexing optical fiber is denoted by n, 0.5 times a mean value of mode field diameters of the first spatial channel and the second spatial channel is denoted by w ($\mu$m), and a return loss caused by the reflection on the second entrance/exit surface is denoted by RL (dB), RL satisfies Formula (B) below.
[Math. 2]

$$RL \geq 97.7\frac{\lambda}{nw}+9.6 \quad \cdots \quad (B)$$

6. The inter-spatial-channel crosstalk measurement method according to any one of claims 1 to 4, wherein

the light reflection suppressor is configured to suppress reflection of the test light on the second entrance/exit surface of the space division multiplexing optical fiber, and
when a wavelength of the test light is denoted by $\lambda$ ($\mu$m), a mean value of refractive indices of the first spatial channel and the second spatial channel of the space division multiplexing optical fiber is denoted by n, and 0.5 times a mean value of mode field diameters of the first spatial channel and the second spatial channel is denoted by w ($\mu$m), an angle $\theta$ (degree) formed between each of planes tangent to centers of the first spatial channel and the second spatial channel and a plane orthogonal to a central axis of the space division multiplexing optical fiber satisfies Formula (C) below.
[Math. 3]

$$\theta \geq 17.8\frac{\lambda}{nw} \quad \cdots \quad (C)$$

7. The inter-spatial-channel crosstalk measurement method according to any one of claims 1 to 6, wherein the first step includes forming the light reflection suppressor by forming the second entrance/exit surface by cleaving the space division multiplexing optical fiber.

8. The inter-spatial-channel crosstalk measurement method according to any one of claims 1 to 6, wherein the first step includes forming the light reflection suppressor by polishing the second entrance/exit surface of the space division multiplexing optical fiber.

9. The inter-spatial-channel crosstalk measurement method according to any one of claims 1 to 5, wherein the first step includes providing the light reflection suppressor by bringing a substance having a refractive index matching a refractive index of the space division multiplexing optical fiber into contact with the second entrance/exit surface of the space division multiplexing optical fiber.

10. The inter-spatial-channel crosstalk measurement method according to claim 9, wherein when a mean value of refractive indices of the first spatial channel and the second spatial channel of the space division multiplexing optical fiber is denoted by n and the refractive index of the substance is denoted by n0, a relationship between a relative refractive index difference Δ0 defined as Δ0 = |n - n0|/n0 and $\alpha_{dB} \cdot L$ (dB) satisfies Formula (D) below.
[Math. 4]

$$\Delta 0 \leq 1.14 \times 10^{-2} \left( \alpha_{dB} L \right)^{0.473} \qquad \cdot \ \cdot \ \cdot \quad (\,D\,)$$

11. The inter-spatial-channel crosstalk measurement method according to any one of claims 1 to 4, wherein

the light reflection suppressor includes another optical fiber having a cladding mainly including the same material as a cladding of the space division multiplexing optical fiber,
the first step includes fusion-splicing an end surface of the another optical fiber to the second entrance/exit surface of the space division multiplexing optical fiber, and
the another optical fiber after fusion-splicing does not have either a spatial channel aligned with the first spatial channel of the space division multiplexing optical fiber or a spatial channel aligned with the second spatial channel of the space division multiplexing optical fiber.

12. The inter-spatial-channel crosstalk measurement method according to any one of claims 1 to 11, wherein the space division multiplexing optical fiber is a multi-core optical fiber or a multi-mode optical fiber.

13. The inter-spatial-channel crosstalk measurement method according to any one of claims 1 to 12, wherein the first spatial channel and the second spatial channel are a first core and a second core, respectively, or are a first mode and a second mode, respectively.

14. An inter-spatial-channel crosstalk measurement apparatus for measuring crosstalk between spatial channels of a space division multiplexing optical fiber having a first entrance/exit surface and a second entrance/exit surface and having N spatial channels (with N being an integer of 2 or more), the inter-spatial-channel crosstalk measurement apparatus comprising:

a light source unit configured to cause test light to enter the N spatial channels on the first entrance/exit surface;
a light reflection suppressor formed or provided on the second entrance/exit surface and configured to suppress reflection of the test light;
an optical detection unit configured to detect a first optical power and a second optical power, the first optical power being a power of light of at least part of the test light and being a power of light emitted from a first spatial channel that the test light enters, the second optical power being a power of light of the at least part of the test light and being a power of light emitted from a second spatial channel different from the first spatial channel, the at least part of the test light having undergone Rayleigh backscattering in the space division multiplexing optical fiber; and
a calculation unit configured to calculate a magnitude of crosstalk between the first spatial channel and the second spatial channel, based on the first optical power and the second optical power.

15. The inter-spatial-channel crosstalk measurement apparatus according to claim 14, wherein

the test light is continuous light or chopped light,
the first optical power is a total sum of optical power components emitted from the first spatial channel among return optical power components of the test light including backscattered light at each position in a longitudinal direction of the space division multiplexing optical fiber, and
the second optical power is a total sum of optical power components emitted from the second spatial channel among the return optical power components of the test light including backscattered light at each position in the longitudinal direction of the space division multiplexing optical fiber.

16. The inter-spatial-channel crosstalk measurement apparatus according to claim 14 or 15, wherein the calculation unit is configured to calculate a magnitude XT of the crosstalk using Formula (E) below, where PW1 denotes the first optical power, PW2 denotes the second optical power, $\alpha$ (km$^{-1}$) denotes a mean value of transmission loss coefficients of the first spatial channel and the second spatial channel, and L (km) denotes a length of the space division multiplexing optical fiber.
[Math. 5]

$$XT = \frac{PW2}{PW1} \frac{\left[\dfrac{\exp(2\alpha L)-1}{2}\right]}{\left[\dfrac{\exp(2\alpha L)-1}{2\alpha L}-1\right]} \qquad \cdots \quad (\text{E})$$

17. The inter-spatial-channel crosstalk measurement apparatus according to any one of claims 14 to 16, wherein when a loss coefficient $\alpha_{dB}$ of each of the first spatial channel and the second spatial channel is defined as $\alpha_{dB}$ (dB/km) = (10/ln10)$\alpha$, $\alpha_{dB}$·L (dB) is 0.01 dB or more.

18. The inter-spatial-channel crosstalk measurement apparatus according to any one of claims 14 to 17, wherein

the light reflection suppressor is configured to suppress reflection of the test light on the second entrance/exit surface of the space division multiplexing optical fiber, and
when a wavelength of the test light is denoted by $\lambda$ ($\mu$m), a mean value of refractive indices of the first spatial channel and the second spatial channel of the space division multiplexing optical fiber is denoted by n, 0.5 times a mean value of mode field diameters of the first spatial channel and the second spatial channel is denoted by w ($\mu$m), and a return loss caused by the reflection on the second entrance/exit surface is denoted by RL (dB), RL satisfies Formula (F) below.
[Math. 6]

$$RL \geq 97.7\frac{\lambda}{nw}+9.6 \qquad \cdots \quad (\text{F})$$

19. The inter-spatial-channel crosstalk measurement apparatus according to any one of claims 14 to 17, wherein

the light reflection suppressor is configured to suppress reflection of the test light on the second entrance/exit surface of the space division multiplexing optical fiber, and
when a wavelength of the test light is denoted by $\lambda$ ($\mu$m), a mean value of refractive indices of the first spatial channel and the second spatial channel of the space division multiplexing optical fiber is denoted by n, and 0.5 times a mean value of mode field diameters of the first spatial channel and the second spatial channel is denoted by w ($\mu$m), an angle $\theta$ (degree) formed between each of planes tangent to centers of the first spatial channel and the second spatial channel and a plane orthogonal to a central axis of the space division multiplexing optical fiber satisfies Formula (G) below.
[Math. 7]

$$\theta \geq 17.8\frac{\lambda}{nw} \qquad \cdots \quad (\text{G})$$

20. The inter-spatial-channel crosstalk measurement apparatus according to any one of claims 14 to 18, wherein the light reflection suppressor includes a substance having a refractive index matching a refractive index of the space division multiplexing optical fiber, the substance being in contact with the second entrance/exit surface of the space division multiplexing optical fiber.

21. The inter-spatial-channel crosstalk measurement apparatus according to claim 20, wherein when a mean value of refractive indices of the first spatial channel and the second spatial channel of the space division multiplexing optical fiber is denoted by n and the refractive index of the substance is denoted by n0, a relationship between a relative refractive index difference Δ0 defined as Δ0 = |n - n0|/n0 and $\alpha_{dB}$·L (dB) satisfies Formula (H) below.
[Math. 8]

$$\Delta 0 \leq 1.14 \times 10^{-2} \left(\alpha_{dB}L\right)^{0.473} \qquad \cdots \quad (\text{H})$$

22. The inter-spatial-channel crosstalk measurement apparatus according to any one of claims 14 to 17, wherein

the light reflection suppressor includes another optical fiber having a cladding mainly including the same material as a cladding of the space division multiplexing optical fiber, the another optical fiber has an end surface fusion-spliced to the second entrance/exit surface of the space division multiplexing optical fiber, and
the another optical fiber does not have either a spatial channel aligned with the first spatial channel of the space division multiplexing optical fiber or a spatial channel aligned with the second spatial channel of the space division multiplexing optical fiber.

23. The inter-spatial-channel crosstalk measurement apparatus according to any one of claims 14 to 22, wherein the space division multiplexing optical fiber is a multi-core optical fiber or a multi-mode optical fiber.

24. The inter-spatial-channel crosstalk measurement apparatus according to any one of claims 14 to 23, wherein the first spatial channel and the second spatial channel are a first core and a second core, respectively, or are a first mode and a second mode, respectively.

Fig.1

EP 4 667 893 A1

# Fig.2

*Fig.3*

# Fig.4

EP 4 667 893 A1

Fig.5

Fig.6

*Fig.7*

# Fig.8

Fig.9

MEASUREMENT ERROR CAUSED BY REFLECTION LIGHT [dB] (y-axis)

θ [deg] (x-axis)

w[μm]
- – – 2
- —— 2.5
- –·– 3
- —— 3.5
- –··– 4
- ····· 5

*Fig.10*

# Fig.11

*Fig.12*

*Fig.13*

# Fig.14

*Fig.15*

Fig.16

# Fig.17

*Fig.18*

*Fig.19*

```
                    ┌──────────┐
                    │  START   │
                    └─────┬────┘
                          │                      ST1
      ┌───────────────────┴────────────────────────┐
      │           FORMING OR PROVIDING             │
      │    LIGHT REFLECTION SUPPRESSOR    ST11      │
      │  ┌──────────────────────────────────────┐  │
      │  │   PROVIDING ANTI-REFLECTIVE FILM      │  │
      │  │   OR ANTI-REFLECTIVE MATERIAL        │  │
      │  │   OR IMMERSING IN LIQUID             │  │
      │  └──────────────────────────────────────┘  │
      └───────────────────┬────────────────────────┘
                          │
      ┌───────────────────┴────────────────────────┐
      │          ENTERING TEST LIGHT               │──ST2
      └───────────────────┬────────────────────────┘
                          │
      ┌───────────────────┴────────────────────────┐
      │      RAYLEIGH SCATTERING AT LEAST          │──ST3
      │           PART OF TEST LIGHT               │
      └───────────────────┬────────────────────────┘
                          │
      ┌───────────────────┴────────────────────────┐
      │           DETECTING SCATTERED              │──ST4
      │          AND REFLECTED LIGHT               │
      └───────────────────┬────────────────────────┘
                          │
      ┌───────────────────┴────────────────────────┐
      │          CALCULATING CROSSTALK             │──ST5
      └───────────────────┬────────────────────────┘
                          │
                    ┌─────┴────┐
                    │   END    │
                    └──────────┘
```

# Fig.20

START

ST1
FORMING OR PROVIDING
LIGHT REFLECTION SUPPRESSOR

ST12
CONNECTING OTHER END SURFACE OF MCF,
ONE END SURFACE OF WHICH IS PROVIDED
WITH ANTI-REFLECTIVE FILM

ENTERING TEST LIGHT — ST2

RAYLEIGH SCATTERING AT LEAST
PART OF TEST LIGHT — ST3

DETECTING SCATTERED
AND REFLECTED LIGHT — ST4

CALCULATING CROSSTALK — ST5

END

## Fig.21

```
                    START

                                          ST1
   ┌────────────────────────────────────────┐
   │        FORMING OR PROVIDING             │
   │  LIGHT REFLECTION SUPPRESSOR   ST13     │
   │  ┌──────────────────────────────────┐   │
   │  │ CONNECTING OTHER END SURFACES    │   │
   │  │ OF MCFS, ONE END SURFACE OF EACH │   │
   │  │ OF WHICH IS PROVIDED WITH        │   │
   │  │ ANTI-REFLECTIVE FILM             │   │
   │  └──────────────────────────────────┘   │
   └────────────────────────────────────────┘

   ┌────────────────────────────────────────┐
   │         ENTERING TEST LIGHT             │  ST2
   └────────────────────────────────────────┘

   ┌────────────────────────────────────────┐
   │   RAYLEIGH SCATTERING AT LEAST          │  ST3
   │       PART OF TEST LIGHT                │
   └────────────────────────────────────────┘

   ┌────────────────────────────────────────┐
   │      DETECTING SCATTERED                │  ST4
   │     AND REFLECTED LIGHT                 │
   └────────────────────────────────────────┘

   ┌────────────────────────────────────────┐
   │       CALCULATING CROSSTALK             │  ST5
   └────────────────────────────────────────┘

                    END
```

# Fig.22

```
                    ( START )
                        │
   ┌────────────────────────────────────────────┐ ST1
   │        FORMING OR PROVIDING                  │
   │     LIGHT REFLECTION SUPPRESSOR    ST14      │
   │  ┌──────────────────────────────────────┐   │
   │  │ FORMING LIGHT REFLECTION SUPPRESSOR   │   │
   │  │      BY CLEAVING OR POLISHING         │   │
   │  └──────────────────────────────────────┘   │
   └────────────────────────────────────────────┘
                        │
   ┌────────────────────────────────────────────┐ ST2
   │           ENTERING TEST LIGHT                │
   └────────────────────────────────────────────┘
                        │
   ┌────────────────────────────────────────────┐ ST3
   │       RAYLEIGH SCATTERING AT LEAST           │
   │           PART OF TEST LIGHT                 │
   └────────────────────────────────────────────┘
                        │
   ┌────────────────────────────────────────────┐ ST4
   │          DETECTING SCATTERED                 │
   │          AND REFLECTED LIGHT                 │
   └────────────────────────────────────────────┘
                        │
   ┌────────────────────────────────────────────┐ ST5
   │         CALCULATING CROSSTALK                │
   └────────────────────────────────────────────┘
                        │
                    ( END )
```

## Fig.23

```
                    ┌─────────┐
                    │  START  │
                    └─────────┘
                         │                         ST1
        ┌────────────────────────────────────────────┐
        │          FORMING OR PROVIDING              │
        │     LIGHT REFLECTION SUPPRESSOR     ST15   │
        │  ┌──────────────────────────────────────┐  │
        │  │    FUSION SPLICING OPTICAL FIBER     │  │
        │  │   AS LIGHT REFLECTION SUPPRESSOR     │  │
        │  └──────────────────────────────────────┘  │
        └────────────────────────────────────────────┘
                         │
        ┌────────────────────────────────────────────┐
        │           ENTERING TEST LIGHT              │  ST2
        └────────────────────────────────────────────┘
                         │
        ┌────────────────────────────────────────────┐
        │      RAYLEIGH SCATTERING AT LEAST          │  ST3
        │           PART OF TEST LIGHT               │
        └────────────────────────────────────────────┘
                         │
        ┌────────────────────────────────────────────┐
        │          DETECTING SCATTERED               │  ST4
        │          AND REFLECTED LIGHT               │
        └────────────────────────────────────────────┘
                         │
        ┌────────────────────────────────────────────┐
        │          CALCULATING CROSSTALK             │  ST5
        └────────────────────────────────────────────┘
                         │
                    ┌─────────┐
                    │   END   │
                    └─────────┘
```

Fig.24

## INTERNATIONAL SEARCH REPORT

| International application No. |
| --- |
| **PCT/JP2024/005112** |

| A. | CLASSIFICATION OF SUBJECT MATTER |
| --- | --- |
| | *G01M 11/02*(2006.01)i |
| | FI: G01M11/02 J |

According to International Patent Classification (IPC) or to both national classification and IPC

| B. | FIELDS SEARCHED |
| --- | --- |

Minimum documentation searched (classification system followed by classification symbols)

G01M 11/00-G01M 11/08; G02B 6/02-G02B 6/10; G02B 6/44

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | 小林優斗ら. OTDRを用いたマルチコア光ファイバのクロストーク測定. 住友電工テクニカルレビュー. January 2023, vol. 202, (KOBAYASHI, Yuto et al. Measurement of Inter-core Crosstalk of Multicore Optical Fibers with Optical Time Domain Reflectometry. Sumitomo Electric Technical Review.) fig. 2, 9 | 1-2, 4-15, 17-24 |
| A | | 3, 16 |
| Y | WO 2022/201474 A1 (NIPPON TELEGRAPH AND TELEPHONE CORPORATION) 29 September 2022 (2022-09-29) paragraph [0018], fig. 8 | 1-2, 4-15, 17-24 |
| A | | 3, 16 |

☐ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 March 2024** | **16 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/005112**

| Patent document<br>cited in search report | Publication date<br>(day/month/year) | Patent family member(s) | Publication date<br>(day/month/year) |
|---|---|---|---|
| WO 2022/201474 A1 | 29 September 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023021827 A

- WO 2012115162 A

**Non-patent literature cited in the description**

- **TETSUYA HAYASHI et al.** Characterization of Crosstalk in Ultra-Low-Crosstalk Multi-Core Fiber. *Journal of Lightwave Technology*, 2012, vol. 30 (4)

- **MASATAKA NAKAZAWA et al.** Nondestructive measurement of mode couplings along a multi-core fiber using a synchronous multichannel OTDR. *Optics Express*, 2012, vol. 20 (11)